(19)

Europäisches
Patentamt
European
Patent Office
Office européen
des brevets

(11)  **EP 2 427 017 A1**

(12)  **EUROPEAN PATENT APPLICATION**

(43) Date of publication:
**07.03.2012  Bulletin 2012/10**

(21) Application number: **10174705.3**

(22) Date of filing: **31.08.2010**

(51) Int Cl.:
*H04W 74/08* (2009.01)  *H04W 16/14* (2009.01)
*H04B 1/707* (2011.01)  *H04W 84/18* (2009.01)

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **NTT DoCoMo, Inc.**
**Chiyoda-ku**
**Tokyo 100-6150 (JP)**

(72) Inventors:
• **Sinanovic, Sinan**
  **Edinburgh, EH16 6DH (GB)**

• **Haas, Harald**
  **Edinburgh, EH10 5RE (GB)**
• **Aauer, Gunther**
  **80339, München (DE)**

(74) Representative: **Zinkler, Franz**
**Patentanwälte Schoppe, Zimmermann, Stöckeler**
**Zinkler & Partner**
**Postfach 246**
**82043 Pullach (DE)**

Remarks:
Amended claims in accordance with Rule 137(2)
EPC.

(54)  **Transceiver for receiving a data message, for transmitting a data message, related method and computer programs using the combination of interference protection and interference cancellation**

(57)  A transceiver for receiving a data message and for transmitting a busy burst, comprises a receiver (100) for receiving a receive signal comprising a superposition of interfering data and the data message; a transmitter (102) for transmitting the busy burst; an interference canceller (104) for at least partly canceling the interference data from the receive signal to obtain the data message; and a controller (106) for controlling the transmitter to transmit the busy burst in a busy burst slot with a busy burst power, when the data message in a message slot being associated with the busy burst slot was successfully received, and wherein the controller is furthermore configured for formatting the busy burst so that the busy burst comprises an interference cancellation information having different defined states, wherein a first state is so that the first state indicates, to an interfering transmitter (202), that the interfering transmitter is allowed to transmit in the message slot although a received busy burst power would indicate that a transmission is not allowed, and wherein a second state is so that the second state indicates that the interfering transmitter is not allowed to transmit, when the received busy burst power forbids a transmission in the message slot.

DATA RECEIVER / BUSY BURST TRANSMITTER Rx$_p$

1$^{st}$ state: interfering transmitter is allowed to transmit instead of busy busrst reception

2$^{nd}$ state: interfering transmitter is not allowed to transmit in the slot due to busy burst reception

FIGURE 1A

EP 2 427 017 A1

**Description**

Specification

The present invention relates to data transmission systems and, particularly, to wireless transceivers which can be organized in a self-organizing network or an ad-hoc network, but the present invention is also useful in centrally organized networks irrespective of the networks being wired networks or wireless networks.

Spectrum sharing is a common feature of decentralised wireless networks such as ad hoc or the cognitive radio networks (S. Haykin, "Cognitive Radio: Brain-Empowered Wireless Communications," IEEE Journal on Selected Areas in Communications, vol. 23, no. 2, pp. 201-220, 2005). The goal of spectrum sharing is to increase spectrum utilisation in terms of concurrent transmissions. However, meaningful spectrum sharing must balance spatial reuse with co-channel interference. Too much reuse may cause excessive interference which may compromise attainable link and sum rates. On the other hand, too little reuse lowers the sum rate due to the small number of active links. The busy burst protocol allows balancing of the spatial reuse with interference protection. The BB method works as follows:

- Signals are emitted by active receivers in time-multiplexed minislots [2].

- A potential transmitter first listens to the minislot and compares the received BB power with a threshold.

- If the received BB signal is above the threshold, potentially interfering transmitters refrain from transmitting in order to keep the interference at an acceptable level. If the received BB signal is below the threshold, potential transmitter become active.

Under the key assumption that the channel reciprocity holds, this threshold is equivalent to a maximum tolerable interference which may be imposed on the vulnerable receiver which emitted the BB signal. This means that potential interferers are aware, via implicit signalling, how detrimental their transmissions are to neighbouring links.

In one implementation, BB protocol has a fixed system-wide interference threshold (P. Omiyi, H. Haas, and G. Auer, "Analysis of TDD Cellular Interference Mitigation Using Busy-Bursts," IEEE Transactions on Wireless Communications, vol. 6, no. 7, pp. 2721-2731, Jul. 2007), which needs to be carefully optimised by means of extensive system level simulations (4. B. Ghimire, G. Auer, and H. Haas, "Busy Bursts for Trading-off Throughput and Fairness in Cellular OFDMA-TDD," Eurasip Journal on Wireless Communications and Networking, vol. 2009, Article ID 462396, 14 pages, 2009). This approach is improved upon by introducing an adaptive heuristic threshold, which not only provides a sum rate increase over the fixed threshold, but is also less sensitive to the choice of the predefined threshold value (5. S. Sinanovic, H. Burchardt, N. Serafimovski, G. Auer, and H. Haas, "Local Information Busy Burst Thresholding," in Proc. of the International Conference on Communications (ICC'09), Dresden, Germany, Jun. 14-18 2009).

European patent 1855422 B2 discloses a receiver feedback and broadcast signalling using busy bursts.

Unlike spread spectrum techniques, multi carrier and single carrier transmission systems do not have an in-built interference resistance mechanism, which would enable it to be used in multiple cell environments such that universal frequency reuse would be possible. The issue of an intelligent frequency reuse in order to effectively combat co-channel interference (CCI) is an open problem. Furthermore, the lack of a centralized node in ad hoc or multi-hop networks raises the problem that radio resource management (e.g. time and frequency management) cannot be done in a centralized manner. Therefore, the radio resource management in ad hoc or multi-hop networks is another open problem.

A known protocol that is used in multi-hop and ad hoc networks for efficient radio resource management is the so-called busy burst time division multiple access protocol (BB-TDMA). BB-TDMA is a busy burst broadcast protocol utilizing the properties of time division duplex (TDD) to support efficient interference management. A network node, which is currently receiving data, broadcasts a busy burst to prevent potential interferers from transmitting concurrently. A potential transmitter, would only start a transmission if no busy burst is received. The busy burst is broadcast in mini slots or busy signal time slots, which occupy a portion of the time frame structure, with one busy signal time slot being associated with each payload signal time slot. Every transmitter must listen to the busy signal to determine, if it can transmit as scheduled or not without causing significant interference to other users.

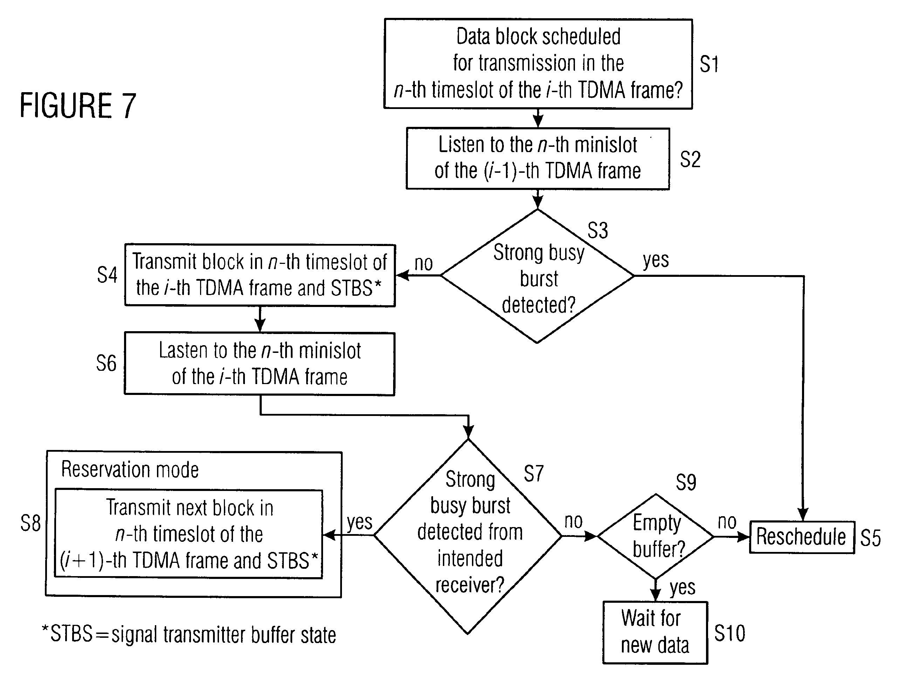

A conventional BB-TDMA transmitter can be in two different modes, the so-called contention mode and the reservation mode. A conventional transmitter following the BB-TDMA protocol, is in a contention mode if there is payload data available for transmission during a radio frame, but the transmitter has not accessed the system yet. Therefore, the transmitter attempts to allocate resources, i.e. a payload signal time slot, in order to start transmission. In Fig. 7 a flowchart of a BB-TDMA transmitter in contention mode is depicted.

In a first step S 1 a data block is scheduled for transmission in the n-th time slot of the i-th TDMA frame. Once a data block has been scheduled the transceiver will start to listen to the n-th mini slot, i.e. the busy signal time slot, of the (i-1)-th TDMA frame in a second step S2. In a third step S3, there are two possibilities, either the transmitter has received a strong busy burst, then the desired n-th time slot is already occupied and the data block has to be rescheduled, indicated by step S5 in the flowchart in Fig. 7. If the transmitter does not detect a strong busy burst in step S3, then this indicates that the desired n-th time slot is not occupied and the transmitter can start a transmission in step S4 and transmit the data block in the n-th time slot of the i-th TDMA frame. It would also signal the transmitter buffer state to let the receiver know, how many data the transmitter is planning to transmit. After the transmitter has transmitted its first data block it will listen in a step S6 to the n-th busy signal time slot of the i-th TDMA frame. Again, there are two possibilities for the n-th busy signal time slot, if the transmitter detects a strong busy burst from the intended receiver the transmitter follows on in step S8 and transmits the next block in the n-th time slot of the i+1 TDMA frame, and signals again its transmitter buffer state. If the transmitter was not able to detect a strong busy burst from the intended receiver in step S7, but it has still data in its buffer, then the transmission has to be rescheduled corresponding to step S5, which is similar to the situation when a strong busy burst was detected in step S3, where the transmitter was trying to find an available payload time slot. However, if the transmitter buffer is empty, i.e. there is no more data to transmit, then the transmission is completed and the transmitter can wait for new data as indicated in the step S 10 in Fig. 7. Clearly, the reception of a busy burst after a first data block has been transmitted serves as an acknowledgement for the transmitter and also for a protection of transmissions from other transmitters, which receive the busy burst in the busy signal time slot associated with that particular payload time slot, and once they detect a busy burst they would reschedule their transmissions and neither access nor interfere the transmission of the desired transmitter. Looking at the transmitter, the busy burst serves as an acknowledgement for the transmission of the first data block and brings the transmitter in a second state, the so-called reservation mode. The reservation mode corresponds to step S8 in Fig. 7, where the transmission of the first data block was successfully acknowledged and the transmitter carries on with the transmission.

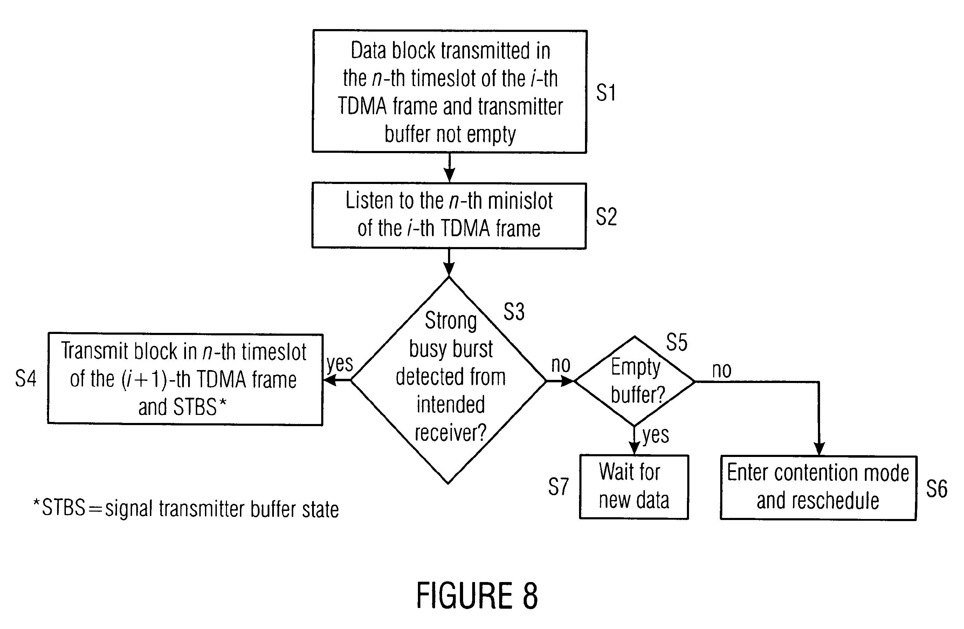

A flowchart of the behavior of a transmitter in reservation mode according to step S8 of Fig. 7 is displayed in Fig. 8. The first step S1 of the flowchart corresponds to the situation where a data block has been transmitted and acknowledged in the n-th time slot of the i-th TDMA frame and the transmitter buffer is not empty yet. The transmitter would then transmit the next data block and listen to the n-th minislot of the i-th TDMA-frame in a step S2, upon which it can either detect a strong busy burst in the n-th mini slot or busy signal time slot or not, according to step S3 in Fig. 8. If it detects a strong busy burst from the intended receiver in step S3 it would carry on transmitting and transmit another data block in the n-th time slot of the i+1 TDMA frame, also signaling its transmitter buffer state. The transmitter then stays in reservation mode and carries on transmitting data for as long as it detects strong busy bursts in the associated busy signal time slot from the intended receiver.

If at some point it does .not detect a strong busy burst from the intended receiver in step S3, then there are two possibilities. If its transmitter buffers are empty then the transmission is completed and the transmitter can go back into contention mode and wait for new data. If the buffers are not empty, then not detecting a strong busy burst from the intended receiver serves as a negative acknowledgement of the last transmission and the transmitter reverts back into contention mode, which is indicated in step S6 in Fig. 8 and reschedules the last transmission. From the Figs. 7 and 8 it can be seen that a transmitter is only in contention mode for initial transmissions or retransmissions, if it succeeds in transmitting a data block in contention mode, it immediately changes to reservation mode, staying for as long as it continuously transmits data blocks successfully. If either its buffers are empty or a successful reception of the data block is not acknowledged by the receiver transmitting a busy burst, it reverts into contention mode.

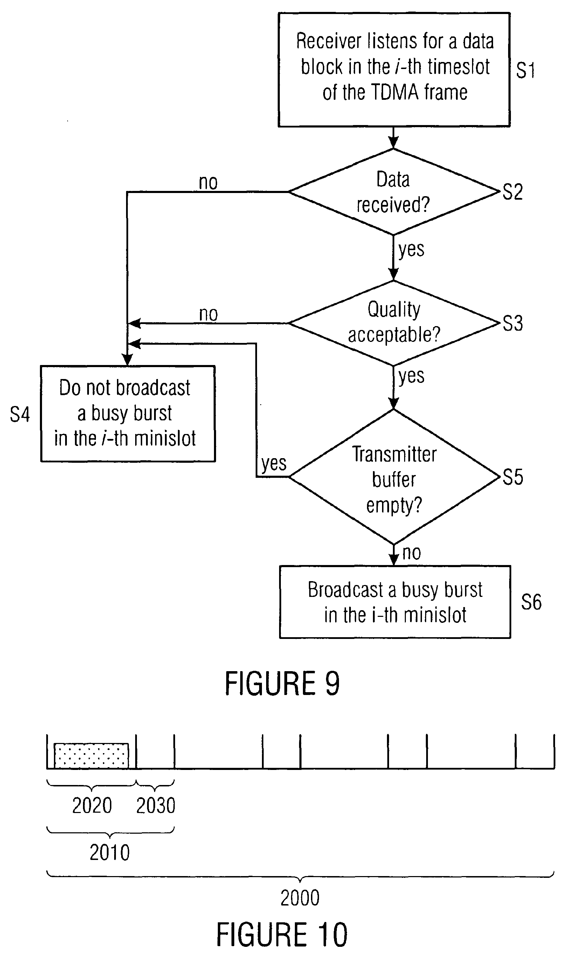

The behavior of a corresponding BB-TDMA receiver is illustrated in the flowchart in Fig. 9. The receiver listens for data blocks during every time slot of the TDMA frame in a first step S 1. If data is received in a second step S2 the receiver verifies the reception quality of the data block in a third step S3. If the reception quality was satisfactory it proceeds with step S5, where it verifies if the transmitter still has data in its buffers. The transmitter buffer state verification is done on the basis of the signaled transmitter buffer state (STBS) from the transmitter. If the transmitter still has data in its buffers, the receiver would transmit a busy burst in the i-th busy signal time slot in step S6, in order to acknowledge the successful reception of the data block transmission of the i-th payload signal time slot of the current TDMA frame. If the receiver does not receive any data, if it receives data with dissatisfactory quality, or if the transmitter buffer is empty and the transmitter has succeeded its transmission, the receiver would not broadcast a busy burst in the i-th mini slot anymore, as shown in step S4.

The basic time structure of a BB-TDMA frame is depicted in Fig. 10 showing a BB-TDMA frame 2000 that is composed of four time slots 2010, of which each is composed of a payload time slot 2020 and a busy signal time slot 2030. As indicated in Fig. 10, there is a data block transmission during the payload time slot 2020, however there is no busy signal response during the associated busy signal time slot 2030 from an intended receiver. This means that the transmitter reverts to contention mode. However, if the data block transmitted during the payload time slot 2020 was the last data block in the transmitter buffer, then it may as well have succeeded with its transmission and no busy signal for acknowledging the transmission of the last data block of the transmit buffer is necessary.

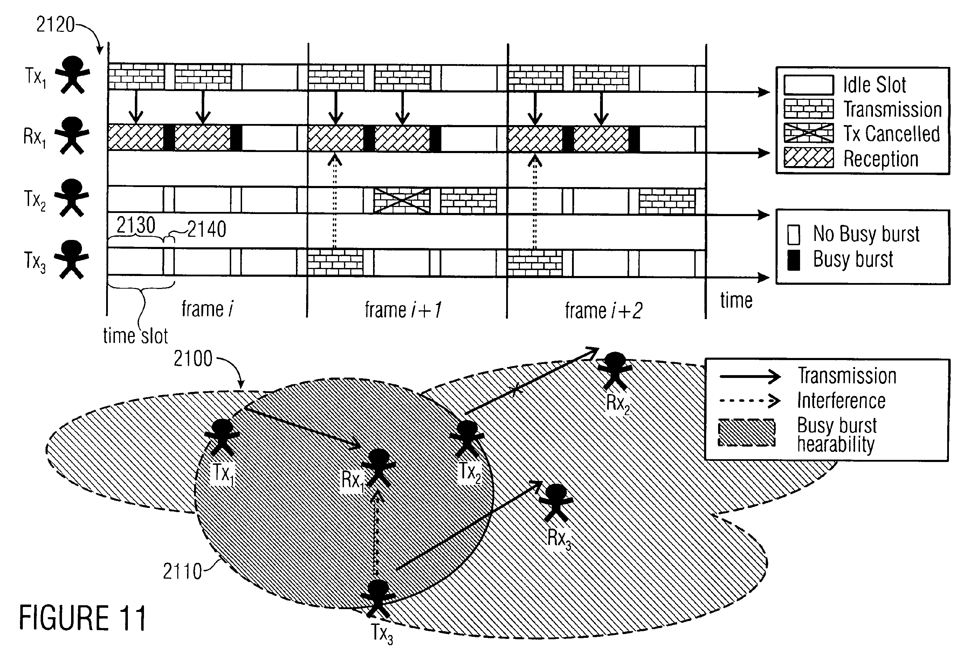

A conventional communication sequence according to the BB-TDMA protocol is illustrated in Fig. 11 showing a communication scenario 2100 where three transmitters $T_{x1}$ $T_{x2}$ and $T_{x3}$ attempt to communicate with

the three receivers $Rx_1$, $Rx_2$ and $Rx_3$, i.e. setting up three transmitter-receiver pairs, $Tx_1$-$Rx_1$, $Tx_2$-$Rx_2$ and $Tx_3$-$Rx_3$. Solid arrows indicate that there is already an active transmission between transmitter $Tx_1$ and receiver $Rx_1$, as well as between transmitter $Tx_3$ and receiver $Rx_3$. A dotted arrow between transmitter $Tx_3$ and receiver $Rx_1$, indicates that the transmission of $Tx_3$ causes interference for the receiver $Rx_1$. The reason why $Tx_3$ is transmitting although there is a communication going on between transmitter $Tx_1$ and receiver $Rx_1$ already, is that the transmitter $Tx_3$ is outside the hearability region of the busy burst or busy signal, which is broadcast by receiver $Rx_1$. The hearability region of the busy burst of the receiver $Rx_1$ is indicated by a dotted circle 2110 in Fig. 11. Moreover, Fig. 11 depicts a communication sequence 2120 between the three transmitters $Tx_1$ $Tx_2$ and $Tx_3$ and at the receiver $Rx_1$. In the communication sequence 2120 three radio frames are shown, Frame i, Frame i+1, and Frame i+2. Each radio frame is composed of three time slots, of which each is composed of a payload signal time slot 2130 and a busy signal time slot 2140. During Frame i transmitter $Tx_1$ transmits data blocks during the first and second payload signal time slots. The receiver $Rx_1$ receives the two data blocks during the first and second payload signal time slots of Frame i and acknowledges the successful reception of the data blocks during the first and second busy signal time slots in Frame i, indicated in Fig. 11 by the black bars in the busy signal time slots in Frame i.

During Frame i, transmitter $Tx_3$ is already in contention mode determining whether the first payload signal time slot in Frame i is occupied or not. Since the transmitter $Tx_3$ is outside the hearability region of the busy signal of receiver $Rx_1$ it does not detect the busy signal of $Rx_1$, during the first busy signal time slot of Frame i, and consequently starts transmitting data to receiver $Rx_3$ during the first payload signal time slot of Frame i+1. Since transmitter $Tx_3$ is still outside the hearability region of the busy signal of receiver $Rx_1$, it also keeps using the first payload time signal time slot in Frame i+2. The situation is different for the transmitter $Tx_2$. $T_{X2}$ was in contention mode during Frame i. Since $Tx_2$ is within the hearability region of Rx 1, it detects the busy signal in the second busy signal time slot during Frame i and therefore cancels a scheduled transmission during the second payload signal time slot in Frame i+1.

Therefore the transmitter $Tx_2$ does not schedule another transmission during the second payload time slot in Frame i+2 as well. The transmitter $Tx_2$ also transmits during the third payload signal time slot in Frame i+1, however this payload signal time slot is not occupied by receiver $Rx_1$, and thus it does not transmit a busy signal in the associated busy signal time slot, and therefore transmitter $Tx_2$ keeps using the third payload time slot also in Frame i+2.

In order to address quality of service problems, a protocol extension for BB-TDMA is provided which enables efficient management of quality of service classes, interference levels, user priorities, radio resource utilization, etc. To this end, information is piggy-packed on the busy burst so that the busy burst conveys additional quality of service/interference tolerance information. Potential other transmitters can take advantage of this information, in a fact, at what power level they can transmit protecting quality of service performance at the vulnerable receiver.

The publication "Sum-rate Increase with the Hybrid of Interference Cancellation and Busy Burst Interference avoidance", S. Sinanovic, G. Auer and H. Haas, Asilomar 2009, pages 1002-1006 suggests a combination of the busy burst protocol with interference cancellation at the receiver in order to boost the sum-rate in shared spectrum networks. Assuming that a receiver is able to cancel the strongest interfering signal, one interference transmitter can be allowed within an exclusion range of an active receiver.

The publication "Interference Cancellation for Cellular System: A Contemporary Overview", J. G. Andrews, IEEE Wireless Communications, April 2005, pages 19-29 discloses an overview over several technologies for performing interference cancellation by using multi-user detection. Different types of multi-user detection are the optimal maximum likelihood technique, a linear technique, a turbo technique, a parallel interference cancellation technique, a successive interference cancellation technique, the usage of a non orthogonal matched filter or the usage of an orthogonal matched filter, where these technologies are different with respect to complexity, latency, the usage of error correction codes and so on.

Problematic with respect to the introduction of interference cancellation into the busy burst concept is the increasing system requirements for the different transceiver nodes. Specifically, backwards compatibility can be a problem, since there might exist transceivers being able to perform interference cancellation and there can also be other transceivers which are not enabled to perform interference cancellation. Additionally, flexibility is required for handling interference cancellation properties for different situations even when transceivers are active which have the capability to perform interference cancellation.

It is the object of the present invention to provide an improved transceiver concept.

This object is achieved by a transceiver in accordance with claim 1 or claim 9, a method for receiving in accordance with claim 15, a method for transmitting in accordance with claim 16, or a computer program in accordance with claim 17.

In accordance with the present invention, the busy burst interference avoidance is combined with the interference cancellation, which is a method for active interference reduction at the receiver in order to obtain a hybrid method being in the position to further reduce interference and increase the sum rate in spectrum sharing systems. To this end, in order to obtain flexibility and to be in the position to find a good rate of between system complexity on the one hand and sum rate increase on the other hand, the busy burst transmitter is provided with a controller for controlling the transmitter in such a way that a busy burst is formatted so that the busy burst comprises an interference cancellation information having different defined states. In one state, an interfering transmitter receiving the busy burst is allowed to transmit in the message slot or a data resource although a received busy burst power would indicate that a transmission in this message slot is not allowed. When, however, the interference cancellation information included in the busy burst indicates that the interference transmitter is not allowed to transmit, and when the received busy burst power forbids a transmission in the message slot, the interference transmitter will not use this message data slot in order to make sure that the interference at the vulnerable receiver, from which the busy burst originates, is in allowable limits. Furthermore, a transceiver receiving the busy burst is implemented for extracting the interference cancellation information from the busy burst. Based on the extracted interference cancellation information, the controller provided in such a transceiver is configured for controlling the transmitter in this transceiver in such a way that the data resource is used, when the extracted interference cancellation information indicates that a data receiver, from which the busy burst originates is tolerant to interference from the transceiver in the data resource.

This procedure, in which the busy burst is used as a signalisation resource for signalling an interference cancellation capability in a receiver provides an enhanced data throughput, but nevertheless allows a trade-off between complexity on the one hand and throughput on the other hand. In an aspect of the present invention, the busy burst is provided with additional busy burst resources which can be separately interpreted a busy burst receiver in order to signal, in addition to the straight-forward busy burst exclusion range, an interference allowance indicator which, in an implementation, is a flag having exactly two defined states indicating, in a set state, that the vulnerable receiver is tolerating interference and which indicates, in a non-set state that the vulnerable receiver is not in the position to perform interference cancellation or is already "fully-loaded" with interference cancellation.

In a further aspect of the invention, the busy burst comprises an additional resource for signalling to a potentially interfering transmitter an inclusion range, i.e., a range around the vulnerable receiver, in which the interfering transmitter must be so that the signal from the interfering transmitter is strong enough at the receiver so that an interference cancellation can be successful. Stated differently, when the interference from the interfering receiver is too small, i.e., when the interfering receiver is not within the inclusion range, but is outside the inclusion range, and probably within the exclusion range, then an interference cancellation will not be successful due to the fact that the interfering signal is too weak with respect to the useful signal at the interfering receiver. Signalling the exclusion range by, for example, providing a certain power in a busy burst resource reserved for the inclusion range allows further flexibility. However, in other embodiments, the inclusion range can be set equal to the exclusion range so that, as an interference cancellation information, the interference allowance indicator flag alone is sufficient.

In accordance with the present invention, the busy burst approach, which provides interference protection, is combined with the interference cancellation technique and, preferably, with the partial strongest interferer cancellation (SIC). Hence, co-channel interference is reduced further and, consequently, a sum rate increase is offered. The performance of this hybrid scheme has been demonstrated for various node densities and ranges of interference thresholds. The hybrid scheme offers an increase in sum rate over the pure busy burst method as well as less sensitivity to the optimal choice of a fixed busy burst threshold value, which makes the new scheme more desirable and flexible from the implementation point of view. Hence, the present invention provides a protocol for a combination of interference avoidance and interference cancellation.

Alternatively or additionally, the present invention provides an apparatus and method for conveying information from an active receiver to a potential transmitter, so that the number of interferers are below a certain limit.

Alternatively or additionally, the present invention provides an apparatus or a method for allowing an active receiver to control the transmitted data rate of an interferer.

Embodiments of the present invention are subsequently illustrated with respect to the accompanying drawings, in which:

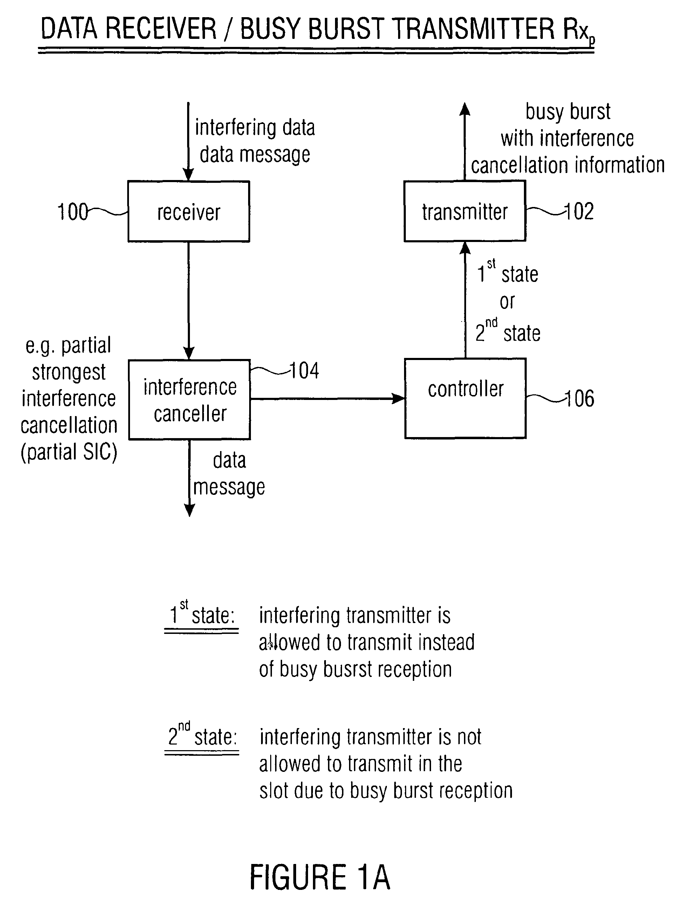

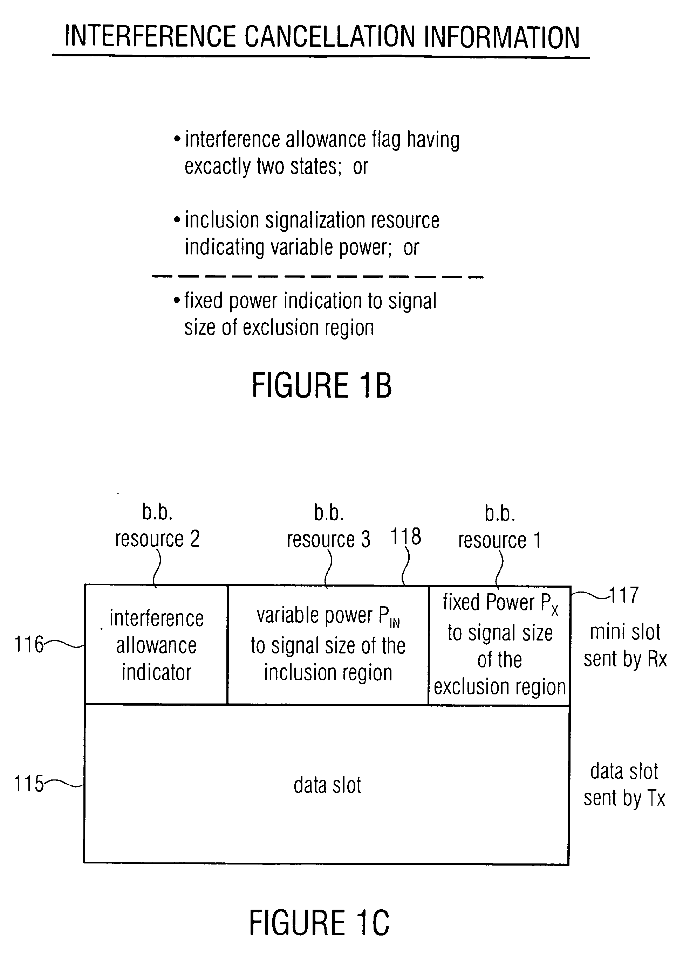

Fig. 1 a    is a block diagram of a transceiver for transceiving a data message and for transmitting a busy burst;

Fig.1b    illustrates different implementations of the interference cancellation information;

Fig. 1 c    illustrates a protocol outline;

Fig. 2    illustrates a schematic representation of a system comprising several transceivers;

Fig. 3    illustrates a block diagram of a transceiver for transmitting a data message and for receiving a busy burst;

Fig. 4a    illustrates a flowchart of a method performed by a transceiver illustrated in Fig. 1 a;

Fig. 4b      illustrates an embodiment of a procedure performed by a transceiver illustrated in Fig. 3;

Fig. 4c      illustrates another implementation of the transceiver illustrated in Fig. 3;

Fig. 4d      illustrates further implementation of the transceiver illustrated in Fig. 3;

Fig. 5a - 5f      illustrate different network states;

Fig. 6a      illustrates a comparison of a partial SIC and a pure busy burst interference avoidance for different node densities;

Fig. 6b      illustrates the sum rates of the hybrid SIC and BB interference avoidance for different node densities compared to sum rates of a hybrid of partial SIC and BB interference avoidance;

Fig. 7      illustrates a flowchart of a conventional BB-TDMA transmitter in contention mode;

Fig. 8      shows a flowchart of a conventional BB-TDMA transmitter in reservation mode;.

Fig. 9      illustrates a flowchart of a BB-TDMA receiver;

Fig. 20      illustrates a structure of a BB-TDMA frame; and

Fig. 21      illustrates a communication scenario following BB-TDMA protocol.

Fig. 1a illustrates a transceiver for receiving a data message and for transmitting a busy burst in accordance with an embodiment of the present invention. The transceiver comprises a receiver 100 for receiving a receive signal, where the receive signal consists of a superposition of interfering data and the (useful) data message. Furthermore, the transceiver comprises a transmitter 102 for transmitting a busy burst. Additionally the transceiver comprises an interference canceller 104 being connected to the receiver 100 and additionally being connected to a controller 106. The controller 106 is configured for controlling the transmitter 102 to transmit the busy burst in a busy burst slot with the busy burst power, when the data message in a message slot being associated with the busy burst slot was successfully received. Furthermore, the controller 106 is configured for formatting the busy burst which is finally transmitted by the transmitter 102 so that the busy burst comprises an interference cancellation information having defined states. These defined states comprise a first state or a second state. The first state is so that it indicates, to an interfering transmitter located at a remote position in a network that the interfering transmitter is allowed to transmit in the message slot under consideration, although a received busy burst power received at the interfering transmitter would indicate that a transmission is not allowed. In other words, the first state indicates to an interfering transmitter that the transceiver illustrated in Fig. 1 a comprises an interference cancellation capability illustrated by the interference canceller 104. Hence, the transceiver signals its interference cancellation property by sending a busy burst within an interference cancellation information being in the first state.

In the second state, the interfering transmitter is not allowed to transmit, when the received busy burst power received at the interfering transmitter forbids a transmission in the message slot. In other words, when the busy burst is received at the interfering transmitter with a power which is above a threshold, then the interfering transmitter is not allowed to transmit so that the problematic interference at the transceiver illustrated in Fig. 1 a is avoided. Stated in other words, the second state of the interference cancellation information indicates that the transceiver -sending this information piggy-packed on the busy burst is not able to perform interference cancellation at all or is in a situation that, although an interference cancellation of, for example, the strongest interferer is already performed, any additional resources for an additional interference cancellation are not available anymore.

Fig. 1b illustrates different kinds of interference cancellation information and, additionally, a way how an exclusion region can be signalled. The interference cancellation information can actually be an interference allowance indicator (IAI) flag having exactly two states. In a set state or "1" state, an interfering transmitter is allowed to transmit in the data message slot/resource. When, however, the IAI flag is in a "0" or a non-set state, then the interfering transmitter is not allowed to transmit in the data slot under consideration, i.e., the data slot being associated to the busy burst slot, in which the busy burst with the interference cancellation information has been detected.

Furthermore, the busy burst comprises a fixed power indication in order to signal the size of the exclusion region, i.e., in order to signal to "competing" transmitters that a certain slot is occupied or reserved as in the straight-forward busy burst protocol.

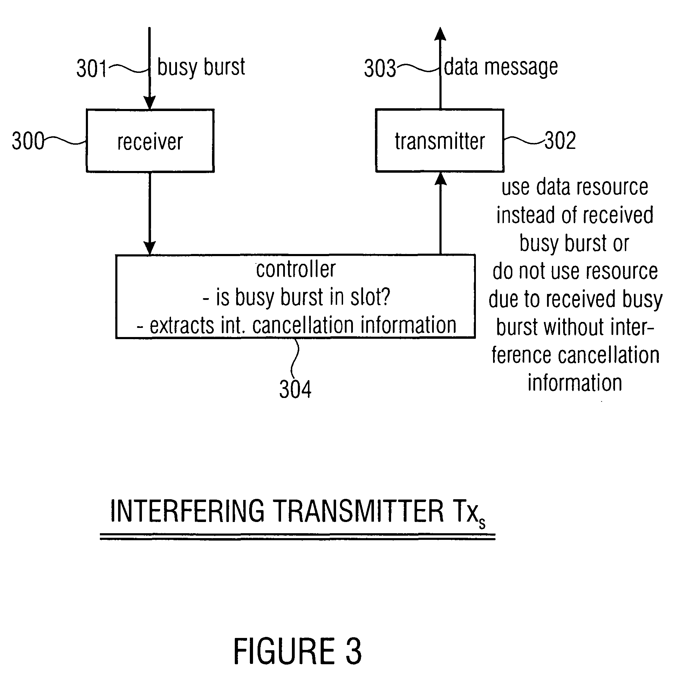

Fig. 1c illustrates a protocol outline. A data slot 115 which is sent by the transceiver such as Tx which is described and illustrated with respect to Fig. 3 is accompanied by at least two minislots. A first minislot 116 also indicated as busy burst resource number 2 serves as indicator informing, if an additional interference inside an inclusion region can be tolerated. The second minislot 117 indicated as busy burst number 1 indicates an information regarding the fixed power that establishes the exclusion region. Additionally, a third minislot 118 is provided which is indicated as busy burst resource number 3. This third busy burst minislot comprises information on a variable power $P_{IN}$ to signal the size of the inclusion region. All three minislots 116, 117, 118 are associated with a data slot, which means that, for example the busy burst slot in the protocol diagram in Fig. 1c is separated, for example, in time into three portions. Alternatively, however, it is preferred to use several frequency carriers for the busy burst slots indicated in Fig. 1c so that a first frequency carrier or a first group of frequency carriers has information on the interference allowance indicator. A second frequency carrier or a second group of frequency carriers different from the first carrier or the first group of carriers has information on the fixed power $P_x$ to signal the size of the exclusion region 117, and a third frequency carrier or a third group of frequency carriers comprises information on the variable power PIN to signal the size of the inclusion region, where the third frequency carrier or the third group of frequency carriers is different from the corresponding first or second one.

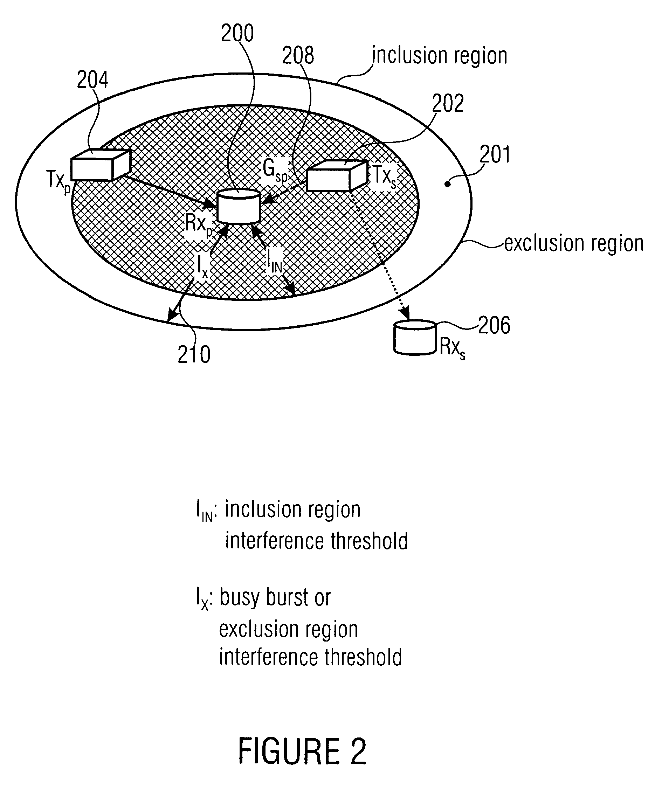

Fig. 2 illustrates a hybrid of busy burst and partial strongest interference cancellation. The interference of the secondary link (s) to the existing primary links (p) receiver should be stronger than the inclusion region interference threshold IIN in order to accurately cancel interference of the strongest interference. Particularly, a "vulnerable" receiver Rxp 200 is illustrated in Fig. 1a as the data receiver/busy burst transmitter. The probably interfering transmitter $Tx_s$ is illustrated in Fig. 2 as 202. The data transmitter having a primary connection to the vulnerable receiver 200 is illustrated at $Tx_p$ 204. Furthermore, a second receiver for a secondary connection between the potentially interfering transmitter $Tx_s$ 202 and the secondary receiver $Rx_s$ 206 is illustrated as well. Furthermore, a channel $G_{sp}$ between the secondary (potentially interfering) transceiver 202 and the primary receiver 202 is illustrated at 208. The exclusion region illustrated in Fig. 2 is determined by the information in the busy burst resource number 1 or 117 in Fig. 1c, i.e., by the value $T_{ix}$ and a certain interference $I_x$ illustrated at 210 is defined by the exclusion region. Furthermore, an inclusion region illustrated in Fig. 2 is determined by the information in the busy burst resource number 3 illustrated at 118 in Fig. 1c, and this inclusion region defines a minimum interference from the secondary transmitter 202 so that the primary receiver 200 is in the position to perform a successful interference cancellation. In this context, it is noted that an interference cancellation requires, in order to be successful, a minimum amount of interference. If the interference at the receiver 200 generated by the transmitter 202 is too low, then an interference cancellation at the receiver 200 does not work. Hence, the transmitting interferer 202 must be quite close to the primary receiver 200 so that the interference is strong enough to allow an interference cancellation at the receiver 200. Depending on the implementation of the devices, a higher or a lower interference can be effected by increasing the data rate of the interfering transmitter 202 or decreasing the data rate of this transmitter when the output power of the transmitter is proportional to the data rate. Naturally, however, when the transmission power of the interfering transmitter 202 remains the same, then the chances for the receiver 200 to perform a successful interference cancellation increase, since, with a smaller data rate, the required minimum error rate drops as well.

Embodiments relate to apparatuses and methods for interference cancellation which is combined with the BB method for interference mitigation. In the BB method, there is an exclusion region around active receivers which is determined by the value of the BB threshold $I_x$. However, if it is possible to remove the interference due to interferer which is active inside a certain inclusion region, defined by a interference threshold $I_{IN}$, it is desirable to allow this situation to happen since the sum rate will increase due to higher active link density while maintaining the BB interference mitigation benefit. Interference cancellation provides the means to successfully cancel such interferer and thereby improve upon pure (i.e. without interference cancellation) BB scheme. As depicted in Fig. 2, a transmitter may either access the medium if it located outside the exclusion range or inside the inclusion range. While the exclusion range is fixed in size, with a corresponding fixed BB power $P_x$; the size of the inclusion range (given by $I_{IN}$) depends on the transmitted rate of the interferer. This means that the inclusion range is to be controlled with a variable feedback signal power, denoted by $P_{IN}$.

In the following the details of the protocol are described. The associated frame structure consists of a number of orthogonal data slots, arranged in time and/or frequency, giving rise to a TDMA or OFDMA multiple access scheme, in line with the BB protocol [2], [3]. Associated to each data slot is a time-multiplexed minislot. The time duration of this minislot typically is one OFDM symbol and in the frequency domain it spans across the number of consecutive sub-carriers which form such data block, or scheduling resource block. This means that the minislot in such OFDMA/TDMA system can be further subdivided into resource elements which we exploit in this invention report. In particular, the minislot carries at least two resource elements, one to signal the exclusion range and inclusion range (i.e., for the special case that: $P_x = P_{IN}$). As an active receiver Rxp can typically only decode a limited number of interferers, an interference allowance flag is introduced as a second resource element, which signals potential transmitters $Tx_s$ whether or not an active receiver is able to tolerate strong interference. In case the exclusion and the inclusion range are different, so that $P_X \neq P_{IN}$, three resource element per minislot are necessary, as depicted in Fig. 2; the third one signals the size of the inclusion range by a variable power $P_{IN}$. Further resource elements per minislots may contain additional information, e.g. regarding the variable power for the heuristic thresholding [4].

Let the already established (primary) link be denoted by the transmitter $Tx_p$ and receiver Rxp. Likewise, the interfering (secondary) link is denoted by the transmitter $Tx_s$ and receiver $Rx_s$. Let the measured signal power of the feedback link at the secondary link $Tx_s$, associated to the inclusion and exclusion range, be denoted by

$$I_{ps}^{IN} = G_{ps}P_X \quad \text{and} \quad I_{ps}^{X} = G_{ps}P_X$$

(the first letter in the subscript, 's' or 'p', denotes the source and the second letter in the subscript, 'p' or 's', denotes the sink). Also, let $p^d$ be the transmitted power used for the data. Exclusion range: Provided channel reciprocity holds, i.e. $G_{ps} = G_{sp}$, the interference $I_{sp}^{d} = G_{sp}P^d$ that $Tx_s$ imposes on Rxp, is directly proportional to Rxp's feedback measured at $Tx_s$, that is The potential transmitter $Tx_s$ is located outside the exclusion range if $I_{sp}^{d} < I_X$ , , where $I_x$ is the maximum acceptable interference at the vulnerable receiver Rxp, i. e., the interference threshold. Accordingly, the feedback signal from an active receiver $Rx_p$ is detected as sufficiently weak at the potential transmitter $Tx_s$ if the following condition holds

$$I_{ps}^{X} < I_X \cdot \frac{P_X}{P^d} \qquad (1)$$

so that $Tx_s$ can access the channel if (1) is satisfied. Hence, excessive interference at active receivers is mitigated by denying potential transmitter(s) of competing link(s) access to a given slot if (1) is violated.

The busy burst protocol is summarized as follows [2]:

> Given successful reception of a slot and that transmitter Txp has more data to transmit, receiver Rxp emits a busy burst in a time-multiplexed mini-slot. If transmitter $Tx_s$ senses a strong busy burst (1), the slot is occupied, so that $Tx_s$ needs to reschedule its transmission to another slot.

Inclusion range: In case the potential transmitter $Tx_s$ is inside the inclusion range, the received feedback from Rxp satisfies the following condition:

$$I_{ps}^{IN} > I_{IN} \frac{P_{IN}}{P^d} \qquad (2)$$

In the above quation, $I_{IN}$ is a predefined interference threshold that specifies the size of the inclusion range, and $P_{IN}$ is the receiver feedback transmit power.
In this case, the interfering signal is sufficiently strong, so that Rxp is able to cancel the signal from $Tx_s$. It is preferred that the rate of $Tx_s$, denoted by $R_s$ needs

to be such that Rxp as well as $Rx_s$ are able to decode it. To this end, it may be meaningful that $Rx_p$ signals the maximum rate it is able to decode. One way to achieve this is by implicit signalling through a variable receiver feedback power $P_{IN}$.
Fig. 3 illustrates an embodiment of a transceiver for transmitting a data message and for receiving a busy burst from a different transceiver. The Fig. 3 device corresponds to the interfering transmitter $Tx_s$ indicated at 202 in the system scenario in Fig. 2. Particularly, the transceiver illustrated in Fig. 3 comprises a receiver 300 for receiving a busy burst 301 1 in a busy burst slot associated to a data slot. Furthermore, the interfering transmitter illustrated in Fig. 3 comprises a transmitter 302 for transmitting a data message 303 in a data slot. Subsequently, it will be outlined that the specific feature of an interfering transmitter is that the interfering transmitter is allowed under certain conditions, to transmit a data message in the same data slot, in which a busy burst 301 has been received, although, in accordance with the straight-forward busy burst protocol, a busy burst would indicate that the corresponding data resource or data slot is reserved and cannot be used by the interfering transmitter.
Furthermore, the interfering transmitter $Tx_s$ comprises a controller 304 for determining, whether a busy burst is received in a busy burst slot related to a data resource intended to be used by the transmitter 302. To this end, the controller 304 is connected to the receiver 300 and is also connected to the transmitter 302. Specifically, the controller 304 is configured for extracting an interference cancellation information from the busy burst 300 and for controlling the transmitter 302 to use the data resource, when the extracted interference cancellation information indicates that a data receiver, from which the busy burst originates, is tolerant to interference from the transceiver in the data resource. This "data receiver" could, for example, be the data receiver/busy burst transmitter $Rx_p$ illustrated in Fig. 1 a as a block diagram and illustrated at 200 in the system scenario of Fig. 2. Hence, the controller 304 is configured to control the transmitter 302 in such a way that the transmitter 302 uses the data resource instead of a received busy burst for this data resource or, alternatively, the controller controls the transmitter so that the transmitter does not use the resource due to a received busy burst without interference cancellation information or with an interference cancellation information indicating that the transceiver illustrated in Fig. 1a cannot tolerate any additional interference anymore.

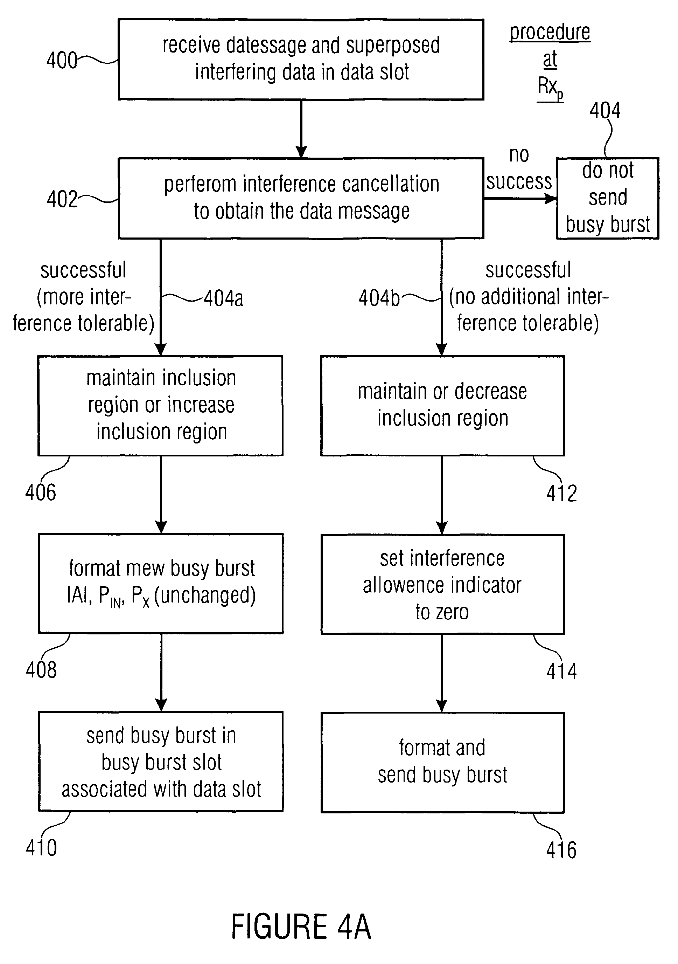

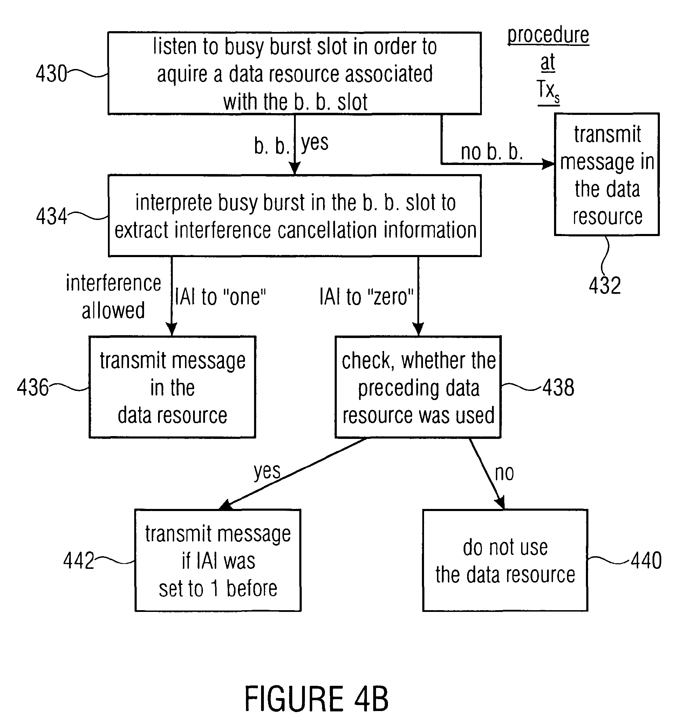

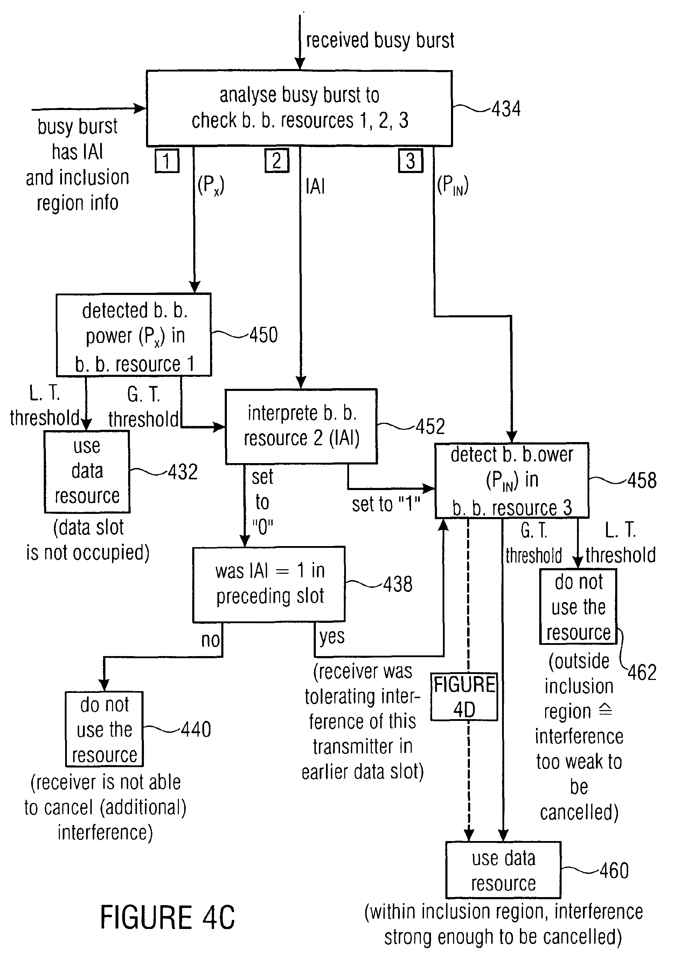

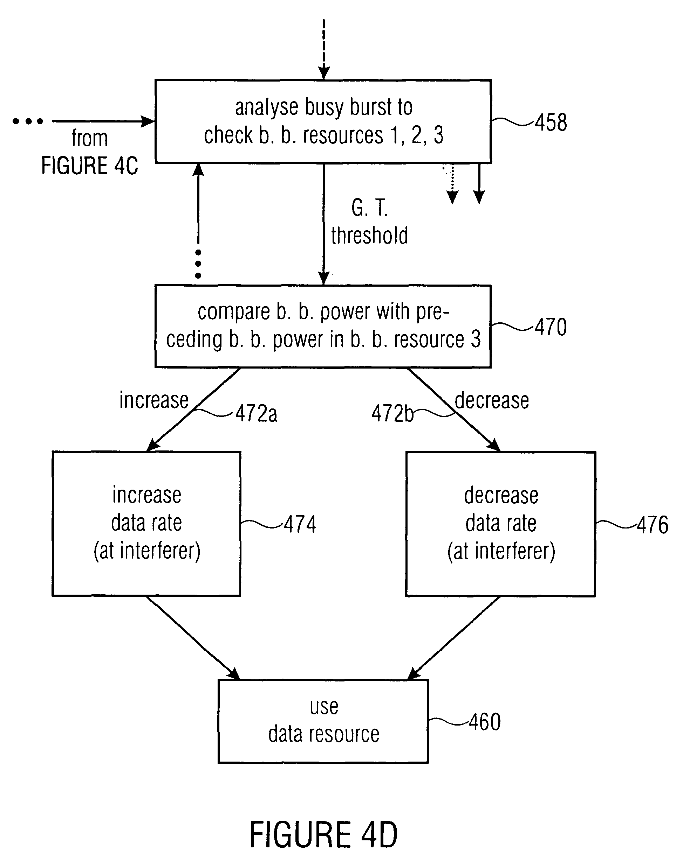

Fig. 4 illustrates a block diagram for illustrating the method/procedure performed in the data receiver/busy burst transmitter $Rx_p$ illustrated as a block diagram in Fig. 1 a and illustrated at 200 in the system scenario in Fig. 2. In step 400, the receiver 100 from Fig. 1a receives the data message and the superposed interfering data in a data slot/resource. Then, in a step 402, the interference canceller 104 in Fig. 1 a performs an interference cancellation to obtain the data message. When the interference cancellation proves to be not successful, i.e., when neither the interfering data can be acquired nor the actual data message can be acquired, then the transmission from the data transmitter to the data receiver has failed. Due to the busy burst protocol, the result of such a "no-success" situation is that the transmitter 102 in Fig. 1 a does not send a busy burst as indicated at 404. When, however, the interference cancellation to obtain the data message was successful, i.e., when the interfering data could be decoded and cancelled or "subtracted" from the receiver input data, it is preferred to perform two alternatives illustrated at 404a and 404b. In the case of 404a, the interference cancellation was successful and the controller 106 in the transceiver of Fig. 1 a determines that the receiver could tolerate even more interference. In such a situation, step 406 would provide a maintenance of the inclusion region as it is or even increase the inclusion region. An increase of the inclusion region as illustrated in Fig. 2 would immediately result in the situation that more potentially interfering transmitters come into the inclusion region and can start to transmit in the secondary link which, of course increases the interference at the receiver 200. To this end, the controller, performing the step 406 and the step 408, formats the new busy burst with an interference allowance indicator IAI set to 1, with a certain inclusion range power $P_{IN}$ and the size of the exclusion region indicated by $P_x$ is left unchanged. Then, in a step 410, the transmitter 102 in Fig. 1 a sends this new busy burst in the busy burst slot associated with the data slot, from which the superposed interfering data were received in step 400. Alternatively, the controller could also decrease the exclusion region by reducing the power $P_x$ which would also result in an additional interference at the receiver, since the probability exists that due to the reduced exclusion region, more transmitters which are close to the border of the exclusion region can start their secondary transmission in the same data slot. All these steps are performed to increase the network utilization and the overall network throughput.

In the alternative indicated at 404b, the interference cancellation at step 402 was successful, but the controller has determined that no additional interference is tolerable. This means that the vulnerable receiver 200 is in the position to continue the operation as before, but the vulnerable receiver is, in a sense, at the border of operating properly. Hence, any additional interference would overload the interference cancellation capabilities. Therefore, in step 412, the controller operates to maintain or decrease the inclusion region illustrated in Fig. 2. A maintenance of the inclusion region means that the vulnerable receiver assumes that it can proceed properly. A decrease of the inclusion region would result in the situation that the vulnerable receiver is in a sense "defensive", which means that the interfering receiver reduced the inclusion region by reducing the power PIN in the busy burst resource number 3 indicated at 118 in Fig.

1 c. The impact of this procedure will be discussed with respect to Figs. 4b, 4c and 4d. Additionally, the controller is configured for setting the interference allowance indicator to 0 as indicated at 414. Hence, any additional transmitter running into the inclusion region will see an interference allowance indicator of 0 which means that this interfering receiver, although being positioned in the inclusion region, will not start a transmission due to the fact that the receiver 200 has signaled that it cannot tolerate additional interference due to limited interference cancellation resources.

In a step 416, this new busy burst information is formatted onto the busy burst by the controller 106 and the new busy burst with the corresponding information in resources 116-118 of Fig. 1c is transmitted by the transmitter 102 in Fig. 1 a.

Subsequently, the procedure of the secondary transmitter or potentially interfering transmitter 202 which is illustrated as a block diagram in Fig. 3 is illustrated with respect to Fig. 4d, 4c and 4d. In a step 430, the receiver 300 listens to a busy burst slot, since the inferring transmitter $Tx_s$ is in the contention mode and wishes to start a data transmission and is, therefore looking for an available data resource. To this end, as indicated at 430, the receiver listens to a busy burst slot in order to acquire a data resource associated with the busy burst slot. When no busy burst is detected, i.e., when the received power in the busy burst resource number 1 indicated at 117 in Fig. 1c is below a threshold, the transmitter starts transmitting the message in the next resource associated with this busy burst as indicated at 432. The transmitter can start using this resource, since no strong enough reservation indicator or busy burst exists, and therefore the corresponding data resource is free. When, however, the controller 304 in Fig. 3 determines that a busy burst exists (B.B. YES), the controller 304 interprets 434 the busy burst in the busy burst slot to extract interference cancellation information. In an implementation, in which only an interference allowance indicator 116 exists as the interference cancellation information, the controller 304 determines whether the interference allowance indicator (IAI) is set to 1 or is set to 0. In the former case, a message is transmitted in the data resource indicated at 436. In the latter case, a check is made whether the preceding data resource was used by the same transmitter $Tx_s$ as indicated at 438. When it is determined that the transmitter did not use the preceding data resource associated to the currently considered busy burst, then the transmitter finally determines to not use the data resource as indicated at 440.

When, however, the busy burst transmitter determines in step 438 that it actually used the preceding data resource associated with this busy burst, the interfering transmitter transmits a message in the data resource associated with the busy burst slot as indicated at 442. Step 442 is in a scenario, in which the vulnerable receiver 200 has performed step 414 in Fig. 4a. In other words, an interfering transmitter started transmission in the data resource due to an earlier interference allowance indicator set to 1. Then, due to the start of the transmission of this interfering transmitter, the additional interference was so high that the vulnerable receiver can still cope with this interference, but cannot tolerate any additional interference. Therefore, the interference allowance indicator was set to 0 in step 414 of Fig. 4a, which, however, does not mean any problem for this receiver, but which means, of course, a data resource denial for a further receiver which would enter the inclusion region. This additional receiver entering the inclusion region would determine in step 438 that it did not use the data resource previously and, therefore, this additional transmitter would step into step 440 and would not use the data resource. This procedure makes sure that the vulnerable receiver cannot only allow interference in the inclusion region but can, importantly, control the number of interfering receivers in the inclusion region. Depending on the interference cancellation properties of the interference canceller 104 in the data transceiver, the vulnerable receiver 200 can allow only the strongest interferer 202 within the inclusion region or the strongest and the second strongest.

Subsequently, a further embodiment of the present invention is discussed, in which as interference cancellation information not only the interference allowance indicator IAI is included, but in which, additionally, busy burst resource number 3 indicated at 118 is included in the busy burst. To this end, as illustrated in Fig. 4c, the busy burst is analyzed 434 in order to check the busy burst resources 1, 2, 3 indicated at 116, 117 and 118 in Fig. 1 c. In step 450, the busy burst power corresponding to $P_x$ in the busy burst resource number 1 is measured. Stated differently, the receiver measures which power is in the first resource 117 of the busy burst, and, of course, the power in this resource is determined by the busy burst transmitter power $P_x$ in this resource. Therefore, $P_x$ is included (in step 450), since the busy burst receiver cannot detect the power $P_x$, but, of course, a considerably smaller value. When the detected power in the busy burst resource number 1 is lower than a threshold, the data resource is used corresponding to step 432 in Fig. 4b. When, however, the power detected in the busy burst resource number 1 is greater than the threshold, this means that the interfering transmitter is within the exclusion region. Now, step 452 is performed, in which the controller 304 interprets the value in busy burst resource number 2, i.e. the interference allowance indicator. When the interference allowance indicator is set to zero, which corresponds to the left branch in Fig. 4b, the check 438 is made whether the interference allowance indicator was equal to one in the preceding slot. If this question is answered by "NO", then the resource is not used as indicated at step 440. This means that the receiver is not able to cancel (additional) interference. When, however, this question in step 438 is answered by "YES", this means that the receiver was tolerating the interference of this transmitter in an earlier data slot. In view of this situation, the interfering transmitter controller 304 proceeds to step 458, in which the busy burst power corresponding to $P_{IN}$ in the busy burst resource number 3 is detected. Hence, the interfering transmitter checks whether the interfering transmitter is within the inclusion region or not. When the busy burst power in the busy burst resource number 3 is greater than the threshold, then the data resource is used as indicated at 460. This means that the interfering transmitter is within the inclusion region and the interference power is strong enough so that the vulnerable receiver can perform a successful interference cancellation by interference canceller 104 in Fig. 1a. When, however, it is determined that the detected busy burst power in the busy burst resource number 3 indicated at 118 in Fig. 1c is lower than a threshold, then this means that the interfering transmitter is outside of the inclusion region, but within the exclusion region, i.e., in the intermediate area indicated at 201 in Fig. 2. Then, as indicated at 462, the data resource is not used.

In the Fig. 4c implementation, the signalization of the inclusion range is used in order to determine whether a potentially interfering transmitter is within the inclusion range or not. Hence, a simple threshold comparison in order to decide between steps 460 and 462 is performed. However, in accordance with another implementation aspect of the present invention, a signalization of the inclusion region in the busy burst resource number 3 indicated at 118 can also be used for rate control in an interfering receiver. This embodiment is illustrated in Fig. 4d. In other words, the vulnerable receiver cannot only signal to a closely spaced receiver that the receiver can start transmission, but the vulnerable receiver can also perform a rate control over this interfering receiver, which means that, depending on the signalization in the busy burst resource 3, the interfering transmitter will increase its data rate or will decrease its data rate.

Fig. 4d illustrates such an embodiment, where, in order to clarify this embodiment, step 458 with the connections to the other surrounding blocks in Fig. 4c has been repeated. When the detection in step 458 results in a reply indicating that the power is greater than a threshold, then the controller 304 within the interfering transmitter performs step 470, in which the busy burst power in the busy burst resource number 3 is compared with the preceding busy burst power in the busy burst resource number 3. When it is determined that the busy burst power in the busy burst resource number 3 has increased from a preceding time to the current time, where this alternative is indicated at 472a, the interfering transmitter increases its data rate 474. The interfering transmitter can do that due to the fact that the vulnerable receiver is in a comfortable situation and can tolerate more interference, which corresponds to step 406 in Fig. 4a. When, however, the vulnerable receiver has decreased the busy burst power, i.e. has made smaller the inclusion region, then the transmitting interferer will decrease its data rate as outlined in step 476. In both cases, however, the data resource is still used as indicated at 460, but with a higher or lower data rate. Hence, the vulnerable receiver cannot only allow or disallow a transmission of an interfering transmitter within the inclusion region, but can also control the data rate of the inferring transmitter and the number of interfering transmitters.

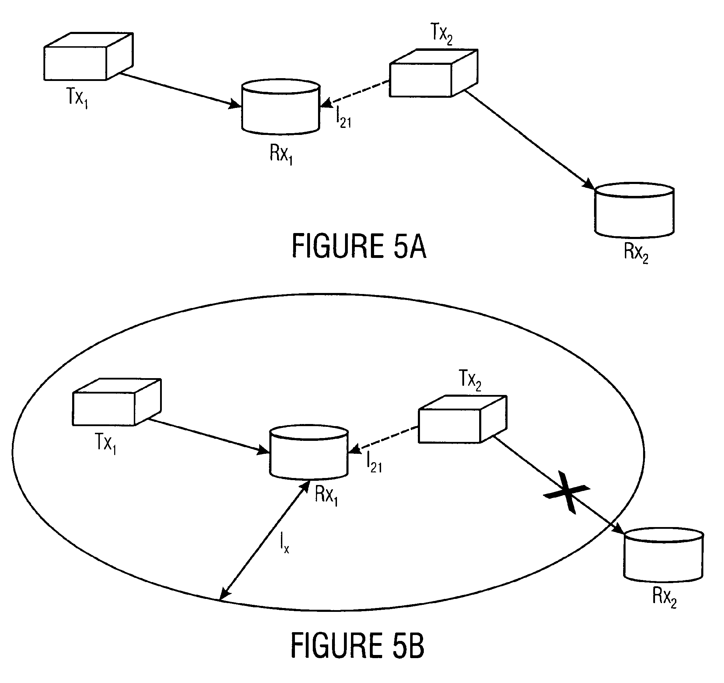

Subsequently, Figs. 5a-5f are discussed figure by figure in order to explain the present invention in a step-by-step manner.

In Fig. 5a, an interference-limited wireless network is illustrated, where transmitters $Tx_n$ communicate with receivers $Rx_n$. If several transmissions occur concurrently, interference may severely affect the attainable spectral efficiency. Hence, the present invention addresses the goal to mitigate the interference while the spectral efficiency is maximized.

Fig. 5b illustrates a situation, in which an exclusion range is established around an active receiver $Rx_1$. The transmitter $Tx_2$ must not transmit, since its interference $I_{21}$, to receiver $Rx_1$ is above an interference threshold Ix. The exclusion range is determined by the busy burst resource number 1 illustrated at 117 in Fig. 1 c.

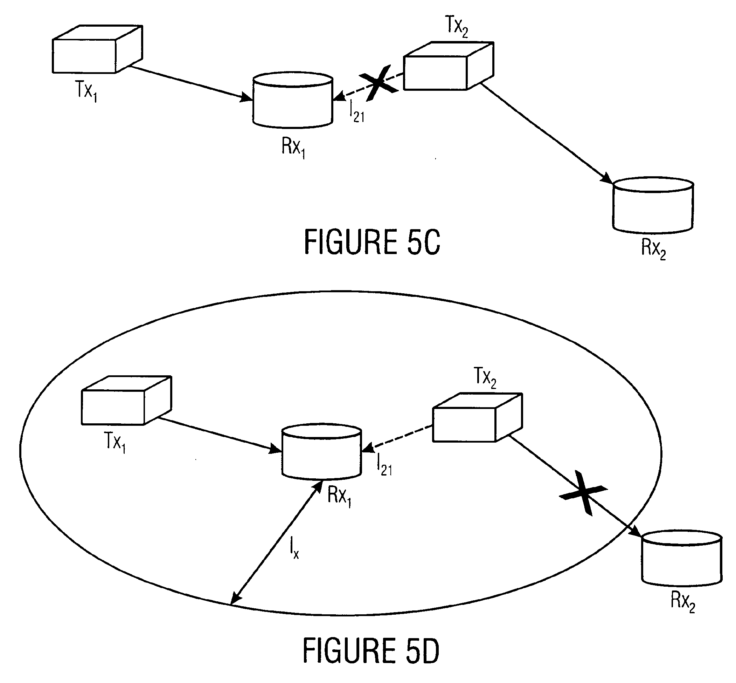

Fig. 5c illustrates an interference cancellation scenario, where the receiver $Rx_1$ is capable of canceling the interference $Tx_2$. Hence, the secondary link between $Tx_2$ and $Rx_2$ may remain active. This results in an enhanced spectral efficiency through the increase in spatial reuse.

Fig. 5d illustrates a situation similar to Fig. 5b, where an exclusion range is established around the active receiver $Rx_1$, and where, without interference cancellation, there would be a reduction of spatial reuse, i.e. a reduction of the number of concurrently active links per unit area.

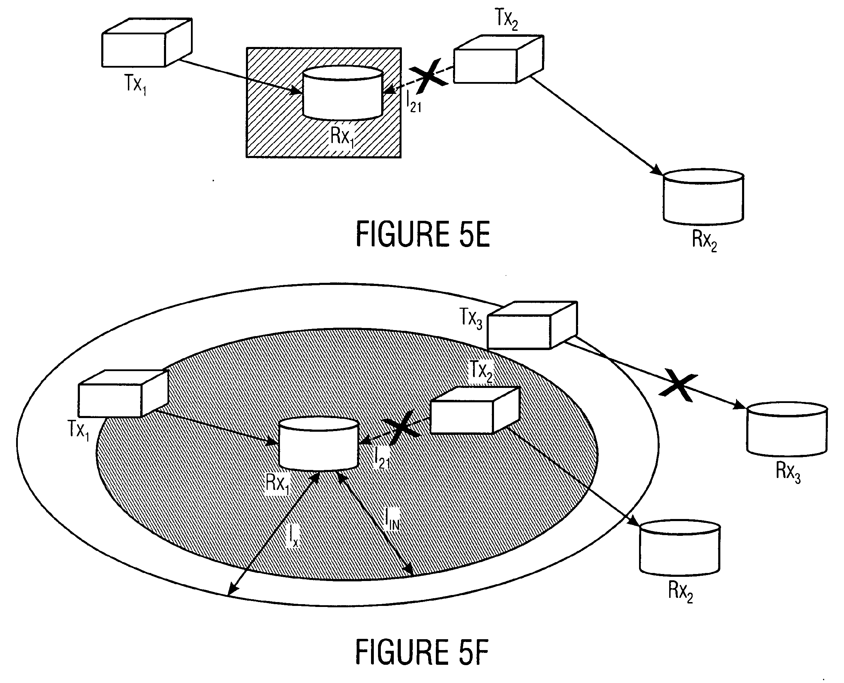

Fig. 5e illustrates a situation, which is similar to Fig. 5c, and in which the receiver $Rx_1$, is capable of canceling the interference of $Tx_2$. The capabilities of the receiver are taken into account. The receiver $Rx_1$ may only be able to cancel a limited number of links, typically one or two links, and there could also be the situation that the rate $R_2$ of the secondary link between $Tx_2$ and $Rx_2$ may be too high for $Rx_1$. This could be specifically the case, when the second receiver $Rx_2$ is quite close to $Tx_2$.

Hence, Fig. 5f illustrates a situation where the interference avoidance and interference cancellation are combined. An inclusion range is defined, and only transmissions inside the inclusion range are allowed. All other concurrent transmissions must be outside the exclusion region.

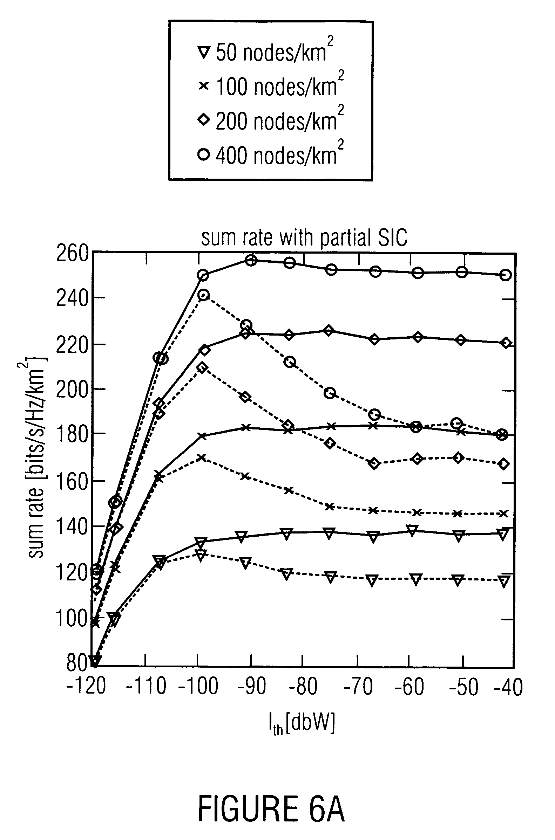

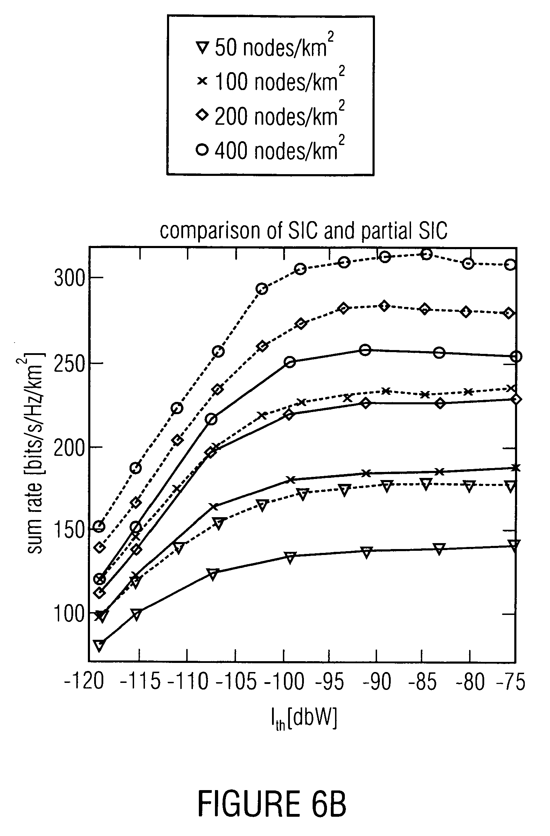

Fig. 6a illustrates the sum rates of the partial SIC (strongest interferer cancellation) in solid lines and a pure busy burst interference avoidance in dashed lines. The comparison is made for different node densities. The partial SIC is achieved, when the interference cancellation is performed only when the intended link is weaker than the interfering link. The partial SIC provides better some rate performance than the pure busy burst method as expected, but the partial SIC is worse than the IDLSIC as can be seen by comparison with Fig. 6b.

Fig. 6b illustrates sum rates of the hybrid of SIC and busy burst interference avoidance in dotted lines for different node densities in comparison to sum rates of the hybrid of partial SIC and busy burst interference avoidance in solid lines. The hybrid of SIC and busy burst outperforms the hybrid of partial SIC and busy burst method, but the implementation requirements regarding complexity, costs and power consumption, which is an particularly important issue in mobile devices also increase with increasing interference cancellation capabilities. In view of that, it is preferred to implement interference cancellation in such a way that the interference cancellers are enabled to perform an interference cancellation only with a limited number of interference interferers, where this limited number is preferably smaller than 5 and even more preferably smaller than 3 and, in some other embodiments, the interference cancellers can be enabled to only cancel the strongest interferer.

The new solution of adding the interference cancellation to BB method is summarised as follows:

- The interference allowance flag, which is transmitted in one of the resource elements of a minislot (see Fig. 1 c), indicates if additional interference inside the BB protected region can be tolerated. In case an active receiver Rxp already cancels one interfering link, Rxp sets the interference allowance flag to zero. Additional interfering links that are inside the inclusion range are then informed that $Rx_p$ is no longer able to cancel additional interference and therefore refrain from transmitting.

- In order to accurately cancel the interferer, it is important to correctly decode the interfering signal at the active receiver $Rx_p$. This condition can be enforced through a variable power PIN on a third resource element of the receiver feedback minislot (see Fig. 2). In other words, there is *inclusion* region around the receiver in which the potential transmitter can be activated since it can be cancelled.

This method which enables correct reception of the interfering signal at the active receiver where the cancellation can then be performed is termed partial SIC.

The principle of interferer cancellation can similarly be extended to cancellation of other interferers: second strongest, third strongest etc. It is important to note that, while multiple cancellations ensure less interference and, consequently, higher sum rate, they also increase complexity of the proposed system. Therefore, performance can be traded off for acceptable level of receiver complexity.

The key advantages of embodiments can be summarised as follows:

- The newly proposed hybrid interference management technique which combines interference cancellation of partial SIC with interference mitigation of BB mechanism ensures higher sum rate than the pure BB approach.

- The proposed hybrid interference management techniques is less sensitive to the choice of BB threshold which is at the heart of BB approach. While BB approach has to optimised to take advantage of its peak performance, the hybrid technique provides peak performance for large range (tens of dBs) of the threshold values.

- Flat performance in terms of sum rate for large range of BB threshold implies that it can be achieved with fewer high rate links or more lower rate links. This additional flexibility allows for better tuning of the network according to the user needs.

- The gains in the sum rate improve for higher link density environments which are very likely for future generation of wireless networks.

- The performance can be traded off for complexity: cancellations beyond strongest interferer require more complex receiver but for scenarios where this is feasible it can offer higher sum rate by further decrease of the interference

We demonstrate that the hybrid of partial SIC method and BB scheme offers significant gains in terms of sum rate over the pure BB approach for a range of BB fixed threshold values and several node densities in Fig. 6a. Furthermore, the sum rate gains are higher for higher densities in both absolute and percentage terms. This is significant for the future wireless systems which will have high density of wireless devices which share scarce spectrum resources. It is also important to note that the newly proposed scheme is much less sensitive to the choice of BB fixed threshold value than the pure BB approach which requires very careful choice of the threshold to achieve its peak sum rate.

Although ideal SIC scheme outperforms partial SIC, as can be seen in Fig. 6b, it is not achievable in practice since incorrectly received interfering signal cannot be cancelled. However, the plot indicates that by further (i.e. second, third ...) strongest interferer cancellation, additional sum rate gains can be achieved at the expense of more complex receiver structure.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

1. S. Haykin, "Cognitive Radio: Brain-Empowered Wireless Communications," IEEE Journal on Selected Areas in Communications, vol. 23, no. 2, pp. 201-220, 2005.

2. P. Omiyi, H. Haas, and G. Auer, "Analysis of TDD Cellular Interference Mitigation Using Busy-Bursts," IEEE Transactions on Wireless Communications, vol. 6, no. 7, pp. 2721-2731, Jul. 2007.

3. B. Ghimire, G. Auer, and H. Haas, "Busy Bursts for Trading-off Throughput and Fairness in Cellular OFDMA-TDD," Eurasip Journal on Wireless Communications and Networking, vol. 2009, Article ID 462396, 14 pages, 2009.

4. S. Sinanovi'c, H. Burchardt, N. Serafimovski, G. Auer, and H. Haas, "Local Information Busy Burst Thresholding," in Proc. of the International Conference on Communications (ICC'09), Dresden, Germany, Jun. 14-18 2009.

5. J. G. Andrews, "Interference Cancellation for Cellular Systems: A Contemporary Overview," IEEE Wireless Communications Magazine, vol. 12, no. 2, pp. 19-29, April 2005.

**Claims**

1. Transceiver for receiving a data message and for transmitting a busy burst, comprising:

   a receiver (100) for receiving a receive signal comprising a superposition of interfering data and the data message;
   a transmitter (102) for transmitting the busy burst;
   an interference canceller (104) for at least partly canceling the interference data from the receive signal to obtain the data message; and
   a controller (106) for controlling the transmitter to transmit the busy burst in a busy burst slot with a busy burst power, when the data message in a message slot being associated with the busy burst slot was successfully received, and
   wherein the controller is furthermore configured for formatting the busy burst so that the busy burst comprises an interference cancellation information having different defined states,
   wherein a first state is so that the first state indicates, to an interfering transmitter (202), that the interfering transmitter is allowed to transmit in the message slot although a received busy burst power would indicate that a transmission is not allowed, and
   wherein a second state is so that the second state indicates that the interfering transmitter is not allowed to transmit, when the received busy burst power forbids a transmission in the message slot.

2. Transceiver of claim 1, wherein the controller is configured to format the busy burst so that the interference cancellation information is an interference allowance flag (116) having exactly two different states, wherein the two different states indicate that the receiver is either allowed or not allowed to transmit, when the received busy burst power would indicate that the transmission is not allowed.

3. Transceiver in accordance with claim 1 or 2, wherein the controller (106) is configured to format the busy burst so that the interference canceling information further comprises a specified power ($P_{IN}$) in a specified inclusion region signalization resource (118), wherein the power in the specified inclusion region signalization resource (118) indicates to the interfering transmitter (202) that the interfering transmitter is allowed to transmit only when a received power in the specified resource is higher than an interference cancellation threshold.

4. Transceiver in accordance with one of the preceding claims, in which the controller is connected to the interference canceller, and
   wherein the controller (106) is configured to format the busy burst in response to information from the interference canceller (104).

5. Transceiver in accordance with any one of the preceding claims,
   in which the controller (106) is configured to format (414) the interference cancellation information from the first state for a busy burst in a first busy burst slot to the second state for a busy burst in a second later busy burst slot, when a reception quality of the useful message drops below a predetermined threshold from the first busy burst slot to the second busy burst slot.

6. Transceiver in accordance with one of the preceding claims, in which the controller (106) is configured to format (412, 414) the interference cancellation information from the first state for a busy burst in a first busy burst slot to the second state for a busy burst in a second later busy burst slot, when the interference canceller (104) determines that the interference canceller cannot perform a successful interference cancellation with a signal from a further interfering transmitter.

7. Transceiver in accordance with one of the preceding claims, and
in which the controller (106) is configured to format the interference cancellation information from the first state for a busy burst in a first busy burst slot to the second state for a busy burst in a second later busy burst slot, when the interference canceller (104) determines that the interference canceller cannot perform a successful interference cancellation with a signal from a further interfering transmitter, and
to set a power ($P_{IN}$) in the specified inclusion region (118) signalization resource to a small value, when the interference canceller (104) determines that a reception quality of the useful message drops below a threshold from the first to the second busy burst slots.

8. Transceiver in accordance with one of the preceding claims,
in which the controller (106) is configured for controlling the transmitter so that the busy burst has three different signalization resources (116, 117, 118),
wherein the busy burst is formed so that a first signalization resource (117) receives a fixed power for signaling an exclusion region, which is independent from the interference cancellation,
wherein the busy burst is formed so that a second resource (116) exactly has two different states for signaling an interference allowance or not, and
wherein the busy bust is formatted so that a third resource (118) being a specified inclusion region signalization resource receives a power ($P_{IN}$) depending on information from the interference canceller to signal an inclusion region.

9. Transceiver for transmitting a data message and for receiving a busy burst from a different transceiver, comprising:

a receiver (300) for receiving the busy burst in a busy burst slot associated to a data slot;
a transmitter (302) for transmitting data in a data slot; and
a controller (304) for determining, whether a busy burst is received in a busy burst slot related to a data resource intended to be used by the transmitter,
wherein the controller (304) is configured for extracting an interference cancellation information from the busy burst and for controlling the transmitter to use the data resource, when the extracted interference cancellation information indicates that a data receiver, from which the busy burst originates, is tolerant to interference from the transceiver in the data resource.

10. Transceiver in accordance with claim 9,
in which the controller (304) is configured to measure (450) a power of the busy burst and to control the transmitter to use the data resource, when the measured power is below a predetermined power threshold.

11. Transceiver in accordance with claims 9 or 10,
wherein the controller (304) is configured to extract (458) an inclusion region power from an inclusion region resource (118) of the busy burst, and
wherein the controller (304) is configured to control the transmitter to use the data resource (460), when the inclusion region power is above an inclusion region threshold.

12. Transceiver in accordance with claim 11, wherein the controller (304) is configured to reduce (476) a data rate of a transmission by the transmitter from a data slot related to the data resource to a later data slot, when the inclusion region power in the busy burst slot related to the data resource drops (470) from a busy burst slot to a later busy burst slot, or to increase (474) a data rate of a transmission by the transmitter from a data slot related to the data resource to a later data, when the inclusion region power in the busy burst slot related to the data resource increases (470) from a busy burst slot to a later busy burst slot.

13. Transceiver in accordance with one of claims 9 to 12,
in which the controller (304) is configured to extract (452) interference allowance information from an interference allowance indication resource (116) from the busy burst, and
wherein the controller is configured to control the transmitter to use (460) the data resource, when the interference allowance information indicates that an interference is allowed in a data message slot related to the data resource and to continuously use the data resource even when the interference allowance information changes (438) to a non-interference allowed state in a busy burst for a following busy burst slot related to the data resource.

14. Transceiver in accordance with one of claims 9 to 13,
in which the controller is configured to extract (450, 452, 458) information from different busy burst resources (116, 117, 118) from a single busy burst,
wherein an information related to a first busy burst resource (117) indicates an exclusion region,
wherein an information related to a second busy burst resource (116) is an interference allowance indication, and

wherein an information related to a third busy burst resource (118) indicates in inclusion region.

15. Method for receiving a data message and for transmitting a busy burst, comprising:

receiving (400) a receive signal comprising a superposition of interfering data and the data message;
transmitting (410) the busy burst;
at least partly canceling (402) the interference data from the receive signal to obtain the data message; and
controlling (406, 412) the transmitting to transmit the busy burst in a busy burst slot with a busy burst power, when the data message in a message slot being associated with the busy burst slot was successfully received, and
formatting (408) the busy burst so that the busy burst comprises an interference cancellation information having different defined states,
wherein a first state is so that the first state indicates, to an interfering transmitter, that the interfering transmitter is allowed to transmit in the message slot although a received busy burst power would indicate that a transmission is not allowed, and
wherein a second state is so that the second state indicates that the interfering transmitter is not allowed to transmit, when the received busy burst power forbids a transmission in the message slot.

16. Method for transmitting a data message and for receiving a busy burst from a different transceiver, comprising:

receiving (430) the busy burst in the busy burst slot associated to a data slot;
transmitting (436, 442) data in a data slot; and
determining, whether a busy burst is received in a busy burst slot related to a data resource intended to be used by the transmitter, and
extracting (434) an interference cancellation information from the busy burst and controlling the transmitting using the data resource, when the extracted interference cancellation information indicates that a data receiver, from which the busy burst originates, is tolerant to interference from the transceiver in the data resource.

17. Computer program having a program code configured for performing the method of claim 15 or the method of claim 16, when running on a processor.

**Amended claims in accordance with Rule 137(2) EPC.**

**1.** Transceiver for receiving a data message and for transmitting a busy burst, comprising:

a receiver (100) for receiving a receive signal comprising a superposition of interfering data and the data message;
a transmitter (102) for transmitting the busy burst;
an interference canceller (104) for at least partly canceling the interference data from the receive signal to obtain the data message; and
a controller (106) for controlling the transmitter to transmit the busy burst in a busy burst slot with a busy burst power, when the data message in a message slot being associated with the busy burst slot was successfully received, and
wherein the controller is furthermore configured for formatting the busy burst so that the busy burst comprises an interference cancellation information having different defined states,
wherein a first state is so that the first state indicates, to an interfering transmitter (202), that the interfering transmitter is allowed to transmit in the message slot although the busy burst power received by an interfering transmitter would indicate that a transmission by the interfering transmitter is not allowed, and
wherein a second state is so that the second state indicates that the interfering transmitter is not allowed to transmit, when the busy burst power received by the interfering transmitter forbids a transmission in the message slot by the interfering transmitter .

**2.** Transceiver of claim 1, wherein the controller is configured to format the busy burst so that the interference cancellation information is an interference allowance flag (116) having exactly two different states, wherein the two different states indicate that the receiver is either allowed or not allowed to transmit, when the received busy burst power would indicate that the transmission is not allowed.

**3.** Transceiver in accordance with claim 1 or 2, wherein the controller (106) is configured to format the busy burst so that the interference canceling information further comprises a specified transmit power $P_{IN}$ in a specified inclusion region signalization resource (118), wherein the power received by the interfering transmitter in the specified inclusion region signalization resource (118) indicates to the interfering transmitter (202) that the interfering transmitter is allowed to transmit only when a power received by the interfering transmitter in the specified resource is higher than an interference cancellation threshold.

**4.** Transceiver in accordance with one of the preceding claims, in which the controller is connected to the interference canceller, and
wherein the controller (106) is configured to format the busy burst in response to information from the interference canceller (104).

**5.** Transceiver in accordance with any one of the preceding claims,
in which the controller (106) is configured to format (414) the interference cancellation information to the first state for a busy burst in a first busy burst slot, and to the second state for a busy burst in a second later busy burst slot, when a reception quality of the useful message drops below a predetermined threshold from the first busy burst slot to the second busy burst slot.

**6.** Transceiver in accordance with one of the preceding claims, in which the controller (106) is configured to format (412, 414) the interference cancellation information to the first state for a busy burst in a first busy burst slot, and to the second state for a busy burst in a second later busy burst slot, when the interference canceller (104) determines that the interference canceller cannot perform a successful interference cancellation with a signal from a further interfering transmitter.

**7.** Transceiver in accordance with one of the preceding claims, and
in which the controller (106) is configured to format the interference cancellation information to the first state for a busy burst in a first busy burst slot, and to the second state for a busy burst in a second later busy burst slot, when the interference canceller (104) determines that the interference canceller cannot perform a successful interference cancellation with a signal from a further interfering transmitter, and to set a transmit power $P_{IN}$ in a specified inclusion region (118) signalization resource to a small value, when the interference canceller (104) determines that a reception quality of the useful message drops below a threshold from the first busy burst slot to the second busy burst slot.

**8.** Transceiver in accordance with one of the preceding claims,
in which the controller (106) is configured for controlling the transmitter so that the busy burst has three different signalization resources (116, 117, 118),
wherein the busy burst is formed so that a first signalization resource (117) is set to a fixed transmit power for signaling an exclusion region, which is independent from the interference cancellation,

wherein the busy burst is formed so that a second resource (116) exactly has two different states for signaling an interference allowance or not, and wherein the busy bust is formatted so that a third resource (118) being a specified inclusion region signalization resource is set to a transmit power $P_{IN}$ depending on information from the interference canceller to signal an inclusion region.

**9.** Transceiver for transmitting a data message and for receiving a busy burst from a different transceiver, comprising:

a receiver (300) for receiving the busy burst in a busy burst slot associated to a data resource;
a transmitter (302) for transmitting data in the data resource; and
a controller (304) for determining, whether a busy burst is received in a busy burst slot related to a data resource intended to be used by the transmitter,
wherein the controller (304) is configured for extracting an interference cancellation information from the busy burst and for controlling the transmitter to use the data resource, when the extracted interference cancellation information indicates that a data receiver, from which the busy burst originates, is tolerant to interference from the transceiver in the data resource.

**10.** Transceiver in accordance with claim 9,
in which the controller (304) is configured to measure (450) a power of the busy burst and to control the transmitter to use the data resource, when the measured power is below a predetermined power threshold.

**11.** Transceiver in accordance with claims 9 or 10, wherein the controller (304) is configured to measure (458) an inclusion region power from an inclusion region signalization resource (118) of the busy burst, and wherein the controller (304) is configured to control the transmitter to use the data resource (460), when the inclusion region power is above an inclusion region threshold.

**12.** Transceiver in accordance with claim 11, wherein the controller (304) is configured to reduce (476) a data rate of a transmission by the transmitter from a data slot related to the data resource to a later data slot, when the inclusion region power in the busy burst slot related to the data resource drops (470) from a busy burst slot to a later busy burst slot, or to increase (474) a data rate of a transmission by the transmitter from a data slot related to the data resource to a later data slot, when the inclusion region power in the busy burst slot related to the data resource increases (470) from a busy burst slot to the later busy burst slot.

**13.** Transceiver in accordance with one of claims 9 to 12,
in which the controller (304) is configured to extract (452) interference allowance information from an interference allowance indication resource (116) from the busy burst, and
wherein the controller is configured to control the transmitter to use (460) the data resource, when the interference allowance information indicates that an interference is allowed in a data message slot related to the data resource and to continuously use the data resource even when the interference allowance information changes (438) to a non-interference allowed state in a busy burst for a later busy burst slot related to the data resource.

**14.** Transceiver in accordance with one of claims 9 to 13,
in which the controller is configured to extract (450, 452, 458) information from different busy burst resources (116, 117, 118) from a single busy burst,
wherein an information related to a first busy burst resource (117) indicates an exclusion region,
wherein an information related to a second busy burst resource (116) is an interference allowance indication, and
wherein an information related to a third busy burst resource (118) indicates in inclusion region.

**15.** Method for receiving a data message and for transmitting a busy burst, comprising:

receiving (400) a receive signal comprising a superposition of interfering data and the data message;
transmitting (410) the busy burst;
at least partly canceling (402) the interference data from the receive signal to obtain the data message; and
controlling (406, 412) the transmitting to transmit the busy burst in a busy burst slot with a busy burst power, when the data message in a message slot being associated with the busy burst slot was successfully received, and
formatting (408) the busy burst so that the busy burst comprises an interference cancellation information having different defined states,
wherein a first state is so that the first state indicates, to an interfering transmitter, that the interfering transmitter is allowed to transmit in the message slot although a busy burst power received by the interfering transmitter would indicate that a transmission by the interfering transmitter is not allowed, and
wherein a second state is so that the second state indicates that the interfering transmitter is not allowed to transmit, when the busy burst power received by the interfering transmitter forbids a transmission by the interfering transmitter in the message slot.

**16.** Method for transmitting a data message and for receiving a busy burst from a different transceiver, comprising:

receiving (430) the busy burst in the busy burst slot associated to a data resource;
transmitting (436, 442) data in a data resource; and
determining, whether a busy burst is received in a busy burst slot related to a data resource intended to be used by the transmitter, and extracting (434) an interference cancellation information from the busy burst and controlling the transmitting using the data resource, when the extracted interference cancellation information indicates that a data receiver, from which the busy burst originates, is tolerant to interference from the transceiver in the data resource.

**17.** Computer program comprising program code means for carrying out the steps of any one of claims 15 or 16 when said program is run on an electronic device.

# DATA RECEIVER / BUSY BURST TRANSMITTER $Rx_p$

interfering data
data message

100 — receiver

busy burst
with interference
cancellation information

transmitter — 102

$1^{st}$ state
or
$2^{nd}$ state

e.g. partial
strongest
interference
cancellation
(partial SIC)

interference
canceller — 104

controller — 106

data
message

$1^{st}$ state: interfering transmitter is
allowed to transmit instead
of busy busrst reception

$2^{nd}$ state: interfering transmitter is not
allowed to transmit in the
slot due to busy burst reception

# FIGURE 1A

# INTERFERENCE CANCELLATION INFORMATION

- interference allowance flag having
  excactly two states;  or

- inclusion signalization resource
  indicating variable power;  or

— — — — — — — — — — — — — —

- fixed power indication to signal
  size of exclusion region

## FIGURE 1B

b.b.
resource 2

b.b.
resource 3   118

b.b.
resource 1

| interference allowance indicator | variable power $P_{IN}$ to signal size of the inclusion region | fixed Power $P_X$ to signal size of the exclusion region |
|---|---|---|
| data slot | | |

117
mini slot
sent by Rx

116

115

data slot
sent by Tx

## FIGURE 1C

FIGURE 2

301 ⌐ busy burst          303 ⌐ data message

300 ⌐ receiver          transmitter ⌐ 302

use data resource
instead of received
busy burst or
do not use resource
due to received busy
burst without inter-
ference cancellation
information

controller
- is busy burst in slot?
- extracts int. cancellation information

304

INTERFERING TRANSMITTER Tx$_s$

FIGURE 3

400 — receive datessage and superposed interfering data in data slot

402 — perferom interference cancellation to obtain the data message

no success

404 — do not send busy burst

successful (more inter-ference tolerable)

404a

404b

successful (no additional inter-ference tolerable)

maintain inclusion region or increase inclusion region

406

maintain or decrease inclusion region

412

format mew busy burst IAI, $P_{IN}$, $P_X$ (unchanged)

408

set interference allowence indicator to zero

414

send busy burst in busy burst slot associated with data slot

410

format and send busy burst

416

## FIGURE 4A

FIGURE 4B

received busy burst

analyse busy burst to
check b. b. resources 1, 2, 3 —434

1   $(P_x)$   2   IAI   3   $(P_{IN})$

busy burst
has IAI
and inclusion
region info

detected b. b.
power $(P_x)$ in
b. b. resource 1   —450

L. T.
threshold   G. T.
threshold

interprete b. b.
resource 2 (IAI)   —452

use
data
resource   —432

set
to
"0"

detect b. b.ower
$(P_{IN})$ in
b. b. resource 3   —458

(data slot
is not occupied)

set to "1"

G. T.
threshold   L. T.
threshold

was IAI = 1 in
preceding slot   —438

do not
use the
resource

no   yes

do not
use the
resource   —440

(receiver was
tolerating inter-
ference of this
transmitter in
earlier data slot)

FIGURE
4D

(outside
inclusion
region ≙
interference
too weak to
be
cancelled)   —462

(receiver is not able
to cancel (additional)
interference)

use data
resource   —460

FIGURE 4C

(within inclusion region, interference
strong enough to be cancelled)

analyse busy burst to
check b. b. resources 1, 2, 3 ⌐458

G. T.
threshold

from
FIGURE 4C

compare b. b. power with pre-
ceding b. b. power in b. b. resource 3 ⌐470

increase
472a

472b
decrease

increase
data rate
(at interferer) ⌐474

decrease
data rate
(at interferer) ⌐476

use
data resource ⌐460

FIGURE 4D

FIGURE 5A

FIGURE 5B

EP 2 427 017 A1

FIGURE 5C

FIGURE 5D

EP 2 427 017 A1

FIGURE 5E

FIGURE 5F

FIGURE 6A

FIGURE 6B

FIGURE 7

Data block scheduled for transmission in the $n$-th timeslot of the $i$-th TDMA frame?  S1

Listen to the $n$-th minislot of the $(i-1)$-th TDMA frame  S2

S3 Strong busy burst detected?

S4 Transmit block in $n$-th timeslot of the $i$-th TDMA frame and STBS*

S6 Lasten to the $n$-th minislot of the $i$-th TDMA frame

S7 Strong busy burst detected from intended receiver?

Reservation mode

S8 Transmit next block in $n$-th timeslot of the $(i+1)$-th TDMA frame and STBS*

S9 Empty buffer?

Reschedule S5

Wait for new data S10

*STBS = signal transmitter buffer state

EP 2 427 017 A1

FIGURE 8

FIGURE 9

FIGURE 10

FIGURE 11

Europäisches
Patentamt

European
Patent Office

Office européen
des brevets

# EUROPEAN SEARCH REPORT

**Application Number**

EP 10 17 4705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2009/009458 A1 (QUALCOMM INC [US]; LI JUNYI [US]; LAROIA RAJIV [US]; TAVILDAR SAURABH) 15 January 2009 (2009-01-15)<br>* abstract *<br>* paragraphs [0003] - [0011], [0049] - [0052], [0060] - [0073], [0077], [0132] - [0138], [0143] - [0148], [0155] - [0163] *<br>* figures 4,5A,5B,6,7,15,16 *<br>----- | 1,2,4,5, 9,10,12, 15-17 | INV.<br>H04W74/08<br><br>ADD.<br>H04W16/14<br>H04B1/707<br>H04W84/18 |
| Y | EP 1 855 390 A1 (NTT DOCOMO INC [JP]) 14 November 2007 (2007-11-14)<br><br>* abstract *<br>* paragraphs [0001] - [0014], [0018] - [0021], [0035] - [0039], [0042] - [0044], [0047] - [0056], [0059], [0068] - [0069], [0076] *<br>* figures 8-10 *<br>----- | 1,2,4,5, 9,10,12, 15-17 | |
| A | SINAN SINANOVIC ET AL: "Sum-rate increase with the hybrid of interference cancellation and busy burst interference avoidance",<br>SIGNALS, SYSTEMS AND COMPUTERS, 2009 CONFERENCE RECORD OF THE FORTY-THIRD ASILOMAR CONFERENCE ON, IEEE, PISCATAWAY, NJ, USA,<br>1 November 2009 (2009-11-01), pages 1002-1006, XP031679566,<br>ISBN: 978-1-4244-5825-7<br>* abstract *<br>* Sections III, III.A, III.B, III.C, IV, IV.A *<br>----- | 1-17 | **TECHNICAL FIELDS SEARCHED (IPC)**<br><br>H04W<br>H04B |

-/--

The present search report has been drawn up for all claims

| Place of search | Date of completion of the search | Examiner |
|---|---|---|
| Munich | 17 February 2011 | Dutrieux, Yann |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

Europäisches
Patentamt

European
Patent Office

Office européen
des brevets

# EUROPEAN SEARCH REPORT

Application Number

EP 10 17 4705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 853 006 A2 (ROKE MANOR RESEARCH [GB]) 7 November 2007 (2007-11-07) * abstract * * paragraphs [0001] - [0004], [0032] - [0036], [0041], [0050], [0054] * ----- | 1-17 | |
| A | Ghimire, Birendra: "Busy Burst Technology Applied to OFDMA-TDD Systems", , 1 February 2010 (2010-02-01), pages 9-63, XP002623054, University of Edinburgh Retrieved from the Internet: URL:http://hdl.handle.net/1842/3780 [retrieved on 2011-02-14] * page 41, line 1 - page 51, line 11 * * Sections 3.4, 3.4.1, 3.4.2, 3.4.4, 3.4.5 * ----- | 1-17 | |

TECHNICAL FIELDS SEARCHED (IPC)

The present search report has been drawn up for all claims

| Place of search | Date of completion of the search | Examiner |
|---|---|---|
| Munich | 17 February 2011 | Dutrieux, Yann |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**

EP 10 17 4705

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2011

| Patent document cited in search report | | Publication date | Patent family member(s) | | Publication date |
|---|---|---|---|---|---|
| WO 2009009458 | A1 | 15-01-2009 | CN | 101690040 A | 31-03-2010 |
| | | | EP | 2179547 A1 | 28-04-2010 |
| | | | JP | 2010533446 T | 21-10-2010 |
| | | | KR | 20100037622 A | 09-04-2010 |
| | | | US | 2009017759 A1 | 15-01-2009 |
| EP 1855390 | A1 | 14-11-2007 | JP | 2008011507 A | 17-01-2008 |
| EP 1853006 | A2 | 07-11-2007 | GB | 2437815 A | 07-11-2007 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1855422 B2

**Non-patent literature cited in the description**

- **S. HAYKIN.** Cognitive Radio: Brain-Empowered Wireless Communications. *IEEE Journal on Selected Areas in Communications,* 2005, vol. 23 (2), 201-220
- **P. OMIYI ; H. HAAS ; G. AUER.** Analysis of TDD Cellular Interference Mitigation Using Busy-Bursts. *IEEE Transactions on Wireless Communications,* July 2007, vol. 6 (7), 2721-2731
- **4. B. GHIMIRE ; G. AUER ; H. HAAS.** Busy Bursts for Trading-off Throughput and Fairness in Cellular OFDMA-TDD. *Eurasip Journal on Wireless Communications and Networking,* 2009, vol. 2009, 14
- **5. S. SINANOVIC ; H. BURCHARDT ; N. SERAFIMOVSKI ; G. AUER ; H. HAAS.** Local Information Busy Burst Thresholding. *Proc. of the International Conference on Communications (ICC'09,* 14 June 2009
- **S. SINANOVIC ; G. AUER ; H. HAAS.** Sum-rate Increase with the Hybrid of Interference Cancellation and Busy Burst Interference avoidance. *Asilomar,* 2009, 1002-1006
- **J. G. ANDREWS.** Interference Cancellation for Cellular System: A Contemporary Overview. *IEEE Wireless Communications,* April 2005, 19-29
- **B. GHIMIRE ; G. AUER ; H. HAAS.** Busy Bursts for Trading-off Throughput and Fairness in Cellular OFDMA-TDD. *Eurasip Journal on Wireless Communications and Networking,* 2009, vol. 2009, 14
- **S. SINANOVI'C ; H. BURCHARDT ; N. SERAFIMOVSKI ; G. AUER ; H. HAAS.** Local Information Busy Burst Thresholding. *Proc. of the International Conference on Communications (ICC'09,* 14 June 2009
- **J. G. ANDREWS.** Interference Cancellation for Cellular Systems: A Contemporary Overview. *IEEE Wireless Communications Magazine,* April 2005, vol. 12 (2), 19-29